# EUROPEAN PATENT SPECIFICATION

(11) **EP 3 034 812 B1**
(45) Date of publication and mention of the grant of the patent: **09.10.2019**
(21) Application number: 15199958.8
(22) Date of filing: 14.12.2015
(51) Int. Cl.: F01D 17/02, G01L 3/10, F01D 21/00

(54) **TORQUE SENSOR MONITORING FOR GAS TURBINE ENGINE**
DREHMOMENTSENSORÜBERWACHUNG FÜR EINEN GASTURBINENMOTOR
SURVEILLANCE D'UN CAPTEUR DE COUPLE POUR MOTEUR DE TURBINE À GAZ

(30) Priority: 19.12.2014 US 201462094469 P
(43) Date of publication of application: 22.06.2016
(73) Proprietor: Rolls-Royce Corporation, Indianapolis, Indiana 46225 (US)
(72) Inventor: Smith, Alan, Columbus Indiana 47201 (US); Amshoff, Mark, Indianapolis Indiana 46256 (US); Burns, Donald, Avon Indiana 46123 (US)
(74) Representative: Dauncey, Mark Peter

(56) References cited:
- EP-A2- 2 538 199
- WO-A2-2008/086248
- US-A1- 2003 028 332
- US-A1- 2006 225 521
- US-A1- 2010 153 025

## Description

### CROSS REFERENCE TO RELATED APPLICATION

This application claims priority to and the benefit of U.S. Provisional Patent Application Number 62/094,469 filed 19 December 2014.

### Field of the Disclosure:

The present disclosure relates generally to gas turbine engines. More specifically, the present disclosure relates to a high frequency torque meter system and methods to use the high frequency torque meter signal on gas turbine engines or engine systems.

### BACKGROUND

Gas turbine engines are used to power aircraft, watercraft, power generators, and the like. Gas turbine engines typically include one or more compressors, a combustor, and one or more turbines. In typical aerospace applications, a fan or propeller is used to provide the majority of the engine thrust and is located in front of the core engine. The compressor includes alternating stages of rotating blades and static vanes, which increase the pressure of the air as it travels through the gas turbine core. The compressor thus outputs higher-pressure air, which it delivers to the combustor. A fuel pump supplies pressurized fuel (such as kerosene) to the combustor, typically via one or more fuel injectors. In the combustor, the fuel is mixed with the higher-pressure air and is ignited by an igniter. The products of the combustion reaction that occurs in the combustor (e.g., hot gas) are directed into a turbine. The turbine is typically made up of an assembly of discs with blades, which are attached to turbine shafts, nozzle guide vanes, casings, and other structures. The turbine converts the thermal energy supplied by the combustion products into kinetic energy. The work extracted from the combustion products by the turbine may be used to drive the fan, the compressor, and, sometimes, an output shaft. Leftover products of the combustion are exhausted out of the engine and can provide some thrust in some configurations.

Aerospace applications of gas turbine engines include turboshaft, turboprop, and turbofan engines. In typical aerospace applications, the gas turbine engine provides thrust to propel the aircraft, and also supplies power for engine accessories and aircraft accessories. Typical engine accessories include an engine control unit, a starter, fuel pumps, oil pumps, etc. Typical aircraft accessories include hydraulic pumps and electric generators to supply hydraulic and electrical power to the aircraft systems.

The gas turbine engine provides thrust via the main engine shafting, which is driven by the turbine as a result of the combustion reaction. The gas turbine engine can also power engine accessories and aircraft accessories by one or more accessory drives. Mechanical power is transferred from turbines to compressors through shaft and spline systems, with bearings providing axial and radial positioning of the rotating components. A central shaft (which may be referred to as a "main" shaft, a "main drive," or a "mainline" shaft, for example) typically links the turbine and compressor sections of the turbine engine. In turbine engines having multiple turbine and compressor sections, there may be multiple, concentric, independently rotatable shafts. For example, a high pressure (HP) shaft may link a high pressure compressor with a high pressure turbine, while a low pressure (LP) shaft links the fan with a low pressure turbine. The low pressure shaft may be concentric with and disposed within the high pressure shaft. In order to extract power from the turbine engine to drive the engine and aircraft accessories, one or more mechanical or electrical "accessory" drives transmit power from the engine mainline shafts to the engine and aircraft accessories. For example, a bevel gear, alone or in combination with other components (such as a stub shaft, idler, spur gears and splines), may be driven by a mainline shaft. The bevel gear may drive an accessory gearbox, which in turn runs the engine accessories and/or aircraft accessories.

Classic "power take-off' systems include mechanical drives that transmit power from the gears mounted on the engine mainline shafts to an accessory gearbox to drive accessories such as pumps and generators. However, the conventional accessory gearbox can be replaced by "more electric" systems that have embedded electrical starter/motor/generators mounted directly on the engine mainline shafts. A system and method for estimating torque value of an engine is provided in US2010/0153025. The described method includes generating corrected variable values from engine measured parameters and using a plurality of steady state tables that output corrected engine torque estimates based on various corrected variable values as inputs. A device and method for detecting rate of change of torque is described in WO2008/086248. The described method includes sensors for outputting signals indicative of a rate of change or torque experienced by a magnetized member in response to a change in torque experienced by the member. Such sensors including at least on sense element capable of detecting a change in a magnetic parameter of a magnetized region of the member positioned proximate to the sense element in response to a change in torque applied to the member. A torqueshaft magnetic field measurement systems for gas turbine engines is described in US 2006/0225521. The system includes a ceramic package enclosing a magnetoresistive sensor for converting a sensed magnetic field into a differential output voltage, an amplifier for converting the voltage into an amplified sensor signal, and a temperature sensor. A rocket engine gear defect monitoring method is described in US 2003/0028332. Vibration and tachometer measurements are used to assess the health of rotating equipment to compute and store two sided cepstrum parameters used to compare the engine performance to a class of engines for determining out-of-family performance indicating the healthy or defective nature of the engine under test. Engine-to-engine comparisons of vibration-related parameters can be used to provide information on abnormal gear behavior. The cepstrum is defined as the inverse discrete Fourier transform of the logarithm of two-sided autospectral density. Signal processing for an inlet debris monitoring system to distinguish particulates is described in EP 2 538 199. A method for operating the debris monitoring system comprises continuously sensing the passage of particulates through a gas turbine engine to produce a time-domain sensor signal. The time-domain sensor signal is Fourier transformed to produce a frequency domain sensor signal. The frequency domain sensor signal is partitioned into bins corresponding to particulate composition categories. At least one feature is identified within each bin, and is used to determine the amount of particulate flow in each particulate composition category.

### SUMMARY

The present invention relates to a gas turbine engine system according to claim 1 and to a method of using a high frequency torque meter signal on a gas turbine engine system according to claim 15. The present application discloses the features recited in the appended claims and the following examples, alone or in any combination.

In an example 1, according to at least one embodiment of this disclosure, a gas turbine engine system includes a gas turbine engine including: a rotor; an output shaft coupled to the rotor, the output shaft having a magnetized portion; and a high frequency-capable magnetic torque sensor located adjacent the magnetized portion of the output shaft; and gas turbine engine electronics to, over time during operation of the gas turbine engine: collect a plurality of data samples from output of the torque sensor, and with the data samples, cause one or more processors to: perform a frequency response data analysis of the plurality of data samples in the frequency domain, wherein to perform the frequency response data analysis comprises to compare a characteristic of a frequency domain spectrum of the plurality of data samples to a predetermined characteristic associated with a frequency-domain torque-related event; based on the frequency response data analysis in the frequency domain, identify one or more frequency-domain torque-related events resulting from torsional vibration of the output shaft; perform a time response data analysis of the plurality of data samples in the time domain; based on the time response data analysis in the time domain, identify one or more time-domain torque-related events resulting from torsional vibration of the output shaft; categorize a combination of frequency-domain torque-related events and time-domain torque-related events according to one or more event categorization criteria; and based on a category of the combination of frequency-domain torque-related events and time-domain torque-related events, initiate a communication from the gas turbine engine system to another device.

An example 2 includes the subject matter of example 1, wherein the gas turbine engine includes a high-pressure (HP) drive train and a low-pressure (LP) drive train, the output shaft is an LP output shaft, and the torque sensor is mounted to the LP output shaft to detect high frequency torque-related events associated with a component of the LP drive train. An example 3 includes the subject matter of example 1 or example 2, wherein the gas turbine engine includes a high-pressure (HP) drive train and a low-pressure (LP) drive train, the output shaft is an HP output shaft, and the torque sensor is mounted to the HP output shaft to detect high frequency torque-related events associated with a component of the HP drive train. An example 4 includes the subject matter of any of examples 1-3, wherein the gas turbine engine includes a high-pressure (HP) drive train and an auxiliary gearbox (AGB) drive train, the output shaft is an output shaft of the HP drive train, a first torque sensor is mounted to the HP output shaft and a second torque sensor is mounted to an AGB shaft, wherein the AGB shaft couples the HP drive train to the AGB. An example 5 includes the subject matter of any of examples 1-4, wherein the magnetized portion of the output shaft includes a portion of a cross section of the output shaft and the magnetized portion has a length that is less than the entire length of the output shaft. An example 6 includes the subject matter of any of examples 1-5, wherein the torque sensor is mounted to the output shaft in close proximity to but not touching the magnetized portion of the output shaft. An example 7 includes the subject matter of any of examples 1-6, wherein the gas turbine engine is a turboprop engine and the torque sensor is mounted to the engine output shaft. An example 8 includes the subject matter of any of examples 1-7, wherein the gas turbine engine is a turboshaft engine, or a turboprop engine, or a turbofan engine. An example 9 includes the subject matter of any of examples 1-8, wherein the gas turbine engine is a turboprop engine including a propeller shaft and propeller gearbox, the output shaft is disposed within the propeller gearbox and connected to the propeller shaft, and the torque sensor is mounted to the output shaft in the propeller gearbox. An example 10 includes the subject matter of any of examples 1-9, wherein the gas turbine engine is a turboshaft engine, the gas turbine engine includes a power gearbox on the output shaft, and the torque sensor is mounted to a shaft of the power gearbox and disposed within the power gearbox. An example 11 includes the subject matter of any of examples 1-10, wherein the category is selected from a plurality of event categories including: control events, maintenance events, and engine health events. An example 12 includes the subject matter of any of examples 1-11, wherein the gas turbine engine electronics are to initiate an automatic engine control routine in response to a torque-related event. An example 13 includes the subject matter of any of examples 1-12, wherein the gas turbine engine system is embodied in an aircraft, and the gas turbine engine electronics are to communicate torque-related event data to an on-board display of the aircraft in response to a torque-related event.

An example 14 includes the subject matter of any of examples 1-13, wherein the gas turbine engine system is embodied in an aircraft, and the gas turbine engine electronics are to communicate torque-related event data to an on-ground maintenance system in response to a torque-related event. An example 15 includes the subject matter of any of examples 1-14, wherein the gas turbine engine electronics are to store torque-related event data in a log file in response to a torque-related event. An example 16 includes the subject matter of any of examples 1-15, wherein to perform a frequency response data analysis includes to continuously generate a high frequency domain spectrum for a plurality of different high frequencies over a time interval. An example 17 includes the subject matter of example 16, wherein to identify one or more frequency-domain torque-related events includes to compare one or more characteristics of the high frequency domain spectrum to frequency domain spectrum characteristics of known torque-related events. An example 18 includes the subject matter of example 17, wherein the gas turbine engine electronics are to continuously generate a low frequency domain spectrum for a plurality of different low frequencies over a time interval. An example 19 includes the subject matter of example 18, wherein to identify one or more frequency-domain torque-related events includes to compare one or more characteristics of the low frequency domain spectrum to frequency domain spectrum characteristics of known torque-related events. An example 20 includes the subject matter of example 19, wherein the gas turbine engine electronics are to identify torque-related events by tagging frequency analysis summary data with reference time tags. An example 21 includes the subject matter of example 20, wherein the gas turbine engine electronics are to use the time response data analysis of an identified torque-related event to determine a time and a spectrum of interest for frequency response analysis. An example 22 includes the subject matter of example 21, wherein the gas turbine engine electronics are to receive data indicative of torque-related events from one or more other sensors of the gas turbine engine system, and use the received data to determine a time and a spectrum of interest for frequency response analysis. An example 23 includes the subject matter of example 22, wherein the gas turbine engine electronics are to identify a trend in torsional oscillations based on the spectrum of interest. An example 24 includes the subject matter of example 23, wherein the gas turbine engine electronics are to monitor torsional cycles and compare the torsional cycles to one or more threshold limits including a torsional vibration limit and a high cycle fatigue limit. An example 25 includes the subject matter of example 24, wherein the gas turbine engine electronics are to compare a characteristic of a frequency spectrum of interest to one or more characteristics of a known engine health condition. An example 26 includes the subject matter of example 25, wherein the gas turbine engine electronics are to output data indicative of an engine health condition or an engine failure mode. An example 27 includes the subject matter of any of examples 1-26, wherein the gas turbine engine electronics are to, at a time interval, detect a torque characteristic, compare the detected torque characteristic to a steady state limit of the torque characteristic, and initiate an action by the gas turbine engine system in response to the comparison of the detected torque characteristic to the steady state limit. An example 28 includes the subject matter of any of examples 1-27, wherein the gas turbine engine electronics are to, at a time interval, detect a torque characteristic, compare the detected torque characteristic to a transient limit of the torque characteristic, and initiate an action by the gas turbine engine system in response to the comparison of the detected torque characteristic to the transient limit. An example 29 includes the subject matter of any of examples 1-28, wherein the gas turbine engine electronics are to continuously store time response data in a buffer for a short time interval determined according to an update rate, wherein the update rate is determined by a rapid waveform. An example 30 includes the subject matter of example 29, wherein the gas turbine engine electronics are to continuously store time response data in a buffer for a longer time interval determined according to an update rate, wherein the update rate is determined by a slower waveform. An example 31 includes the subject matter of example 30, wherein the gas turbine engine electronics are to identify a time period of interest in the time response data based on the stored time domain waveforms. An example 32 includes the subject matter of example 31, wherein the gas turbine engine electronics are to identify a time period of interest in the time response data based on frequency analysis summary data. An example 33 includes the subject matter of example 32, wherein the gas turbine engine electronics are to receive data indicative of torque-related events from one or more other sensors of the gas turbine engine system, and use the received data to determine time period of interest for the time response analysis.

An example 34 includes the subject matter of example 31, wherein the gas turbine engine electronics are to compare a characteristic of a detected time domain waveform to one or more time domain waveform characteristics indicative of known torque-related events, and identify a torque-related event based on the comparison. An example 35 includes the subject matter of example 34, wherein the gas turbine engine electronics are to perform torque trending based on the time domain waveform, and determine an engine health condition based on the torque trending. An example 36 includes the subject matter of example 35, wherein the gas turbine engine electronics are to perform time at torque trending based on the time domain waveform, and determine an engine health condition based on the time at torque trending. An example 37 includes the subject matter of any of examples 1-36, wherein the gas turbine engine electronics are to, with the torque sensor output, monitor the health of the gas turbine engine health or a component of the gas turbine engine system by monitoring one or more parameters indicative of HCF (high cycle fatigue), LCF (low cycle fatigue), limit loading of shafts, compressor torque, and/or turbine torque. An example 38 includes the subject matter of any of examples 1-37, wherein the torque sensor is positioned adjacent to an output shaft of a fan, a propeller, a turbine, or a compressor of the gas turbine engine and the gas turbine engine electronics are to monitor engine rotor balance based on output of the torque sensor. An example 39 includes the subject matter of any of examples 1-38, wherein the torque sensor is positioned adjacent to an output shaft of a fan, a propeller, a turbine, or a compressor of the gas turbine engine and the gas turbine engine electronics are to detect a failure mode of the fan, the propeller, the turbine, or the compressor, wherein the failure mode relates to one or more of a gear failure, a bearing failure, a seal failure, a shaft misalignment, or a shaft rub / interference. An example 40 includes the subject matter of any of examples 1-39, wherein the gas turbine engine electronics are to, with the torque sensor output, detect an engine event including one or more of: a compressor surge, a rotating stall, a shaft break, a bird strike, a water or ice impact on a propeller, a fan or an inlet compressor rotor of the gas turbine engine, a turbine rub, or a compressor rub.

An example 41 includes the subject matter of any of examples 1-40, wherein the gas turbine engine electronics are to monitor the torque sensor output relating to a rotating component of an accessory component of the gas turbine engine for data indicative of a failure mode of the accessory component or a health and life usage parameter of the accessory component. An example 42 includes the subject matter of any of examples 1-41, wherein the gas turbine engine electronics are to monitor the torque sensor output relating to a rotating component of the gas turbine engine for data indicative of one or more of: pump torque, flow from delta pressure, electric starter-generator efficiency, pump efficiency, generator/motor pole passing, engine accessory torque and power loading, pump gear passing, pump cavitation, and component shaft failure. An example 43 includes the subject matter of any of examples 1-42, wherein the gas turbine engine electronics are to monitor the torque sensor output relating to a non-rotating component of the gas turbine engine for data indicative of one or more of: an impact of a non-rotating component on shaft torque, a misalignment of the non-rotating component, a distortion of the non-rotating component, and an actuation of a rotating component. An example 44 includes the subject matter of example 43, wherein the non-rotating component includes one or more of: a fuel nozzle, an inlet guide vane, a compressor/transient handling component, a starting bleed valve, a turbine cooling system, a customer bleed, a core engine sensor, a heat exchanger, a strut wake, or an inlet. An example 45 includes the subject matter of any of examples 1-44, wherein the gas turbine engine electronics are incorporated into real time engine control to one or more of: optimize engine operation relative to damaging oscillations and torsional resonances, provide drive shaft over-torque protection, determine zero and low speed torque, determine low pressure rotor brake load, and/or evaluate static starter or electric starter-generator torque. An example 46 includes the subject matter of any of examples 1-45, wherein the gas turbine engine electronics are to measure accessory gearbox torque to determine a health and/or operational characteristic one or more of the accessory gearbox driven accessories based on the total torque for all of the accessory gearbox components, and, for each of the accessory gearbox components, identify high frequency torque content in the torque spectrum. An example 47 includes the subject matter of any of examples 1-46, wherein the gas turbine engine electronics are to, with the torque sensor output, measure accessory gearbox torque to determine a health and/or operational characteristic one or more of the accessory gearbox driven accessories based on the total torque for all of the accessory gearbox components, and, for each of the accessory gearbox components, identify high frequency torque content in the torque spectrum. An example 48 includes the subject matter of any of examples 1-47, wherein the gas turbine engine electronics are to, with the torque sensor output, measure compressor or fan input torque to determine the health of the compressor or the fan. An example 49 includes the subject matter of any of examples 1-48, wherein the gas turbine engine electronics are to, with the torque sensor output, measure turbine output torque to determine the health of the turbine. An example 50 includes the subject matter of any of examples 1-49, wherein the gas turbine engine electronics are to, with the torque sensor output, measure the low pressure (LP), intermediate pressure (IP) or high pressure (HP) engine shaft torque to determine the shaft power and thereby determine the health of the components located on or coupled to the LP, IP or HP engine shafts. An example 51 includes the subject matter of any of examples 1-50, wherein the gas turbine engine electronics are to, with the torque sensor output, measure fan or propeller input torque to determine engine thrust based on the propulsive efficiency and shaft power. An example 52 includes the subject matter of any of examples 1-51, wherein the gas turbine engine electronics are to, with the torque sensor output, measure fan input torque and power in a turbofan and use the measured fan input torque and power as the thrust control parameter for the gas turbine engine. An example 53 includes the subject matter of any of examples 1-52, wherein the gas turbine engine electronics are to, with the torque sensor output, detect bleed valve position, variable geometry positioning, and/or other engine influences by observing the engine or shaft torsional torque response at the rotor natural frequency and using the observed torque response to indicate torsional excitations close to the natural frequency. An example 54 includes the subject matter of any of examples 1-53, wherein the gas turbine engine electronics are to, with the torque sensor output, determine the engine rotor torsional damping, determine the state of one or more engine components, and determine other engine influences on the damping by observing the torsional torque response at the rotor natural frequency to torque excitations.

### BRIEF DESCRIPTION OF THE DRAWINGS

This disclosure is illustrated by way of example and not by way of limitation in the accompanying figures. The figures may, alone or in combination, illustrate one or more embodiments of the disclosure. Elements illustrated in the figures are not necessarily drawn to scale. Reference labels may be repeated among the figures to indicate corresponding or analogous elements.
FIG. 1A is a simplified schematic block diagram of an environment of at least one embodiment of gas turbine engine torque monitoring system, shown in the context of an aircraft system, as disclosed herein;
FIG. 1B is a simplified schematic block diagram of an environment of at least one embodiment of torque sensor output analysis modules, as disclosed herein;
FIGS. 2A-2F are simplified schematic diagrams of exemplary configurations of the gas turbine engine physical components of FIG. 1, including the installation of a torque sensor on a gas turbine engine rotor, in turbo-shaft, turboprop and turbofan applications, as disclosed herein;
FIG. 3A is a simplified flow diagram of at least one embodiment of torque monitoring logic for the gas turbine engine of FIG. 1, which may be executed by one or more components of the gas turbine engine torque monitoring system of FIG. 1;
FIGS. 3B1, 3B2, and 3B3 are simplified flow diagrams of at least one embodiment of a frequency domain method of analyzing torque signals, which may be embodied in the torque monitoring logic of FIG. 3A, and which may be executed by one or more components of the system of FIG. 1;
FIG. 3C is a simplified flow diagram of at least one embodiment of a time domain method of analyzing torque signals, which may be embodied in the torque monitoring logic of FIG. 3A, and which may be executed by one or more components of the system of FIG. 1; and
FIG. 4A is a simplified meridional/longitudinal sectional view of at least one embodiment of a gas turbine engine with a portion of the engine casing cut away, showing an example of an installation of torque sensors to monitor an output shaft of the turbine engine as disclosed herein; and
FIG. 4B is a simplified meridional/longitudinal sectional view of another embodiment of a gas turbine engine with a portion of the engine casing cut away, showing another example of an installation of torque sensors to monitor an output shaft of the turbine engine as disclosed herein.

### DETAILED DESCRIPTION OF THE DRAWINGS

While the concepts of the present disclosure are susceptible to various modifications and alternative forms, specific embodiments thereof are shown by way of example in the drawings and are described in detail below. It should be understood that there is no intent to limit the concepts of the present disclosure to the particular forms disclosed. On the contrary, the intent is to cover all modifications, equivalents, and alternatives consistent with the present disclosure and the appended claims.

Gas turbine engines are subject to torsional vibrations and high and low frequency torque disturbances as a consequence of operational conditions and other events. As disclosed herein, a torque sensor positioned on an engine rotor can readily observe events that impact the rotor, for example, a bird strike of the fan or a compressor stall, since there is very little damping to the rotor and there is a direct physical link between all parts on the same rotor. Events such as failures of shafts and torsional oscillations of the torsional drive lines can be observed using speed and acceleration changes of the rotor. These characteristics can be used to identity failures and/or characteristics that typically result in failures.

Current design methodologies for measuring engine vibrations use lateral accelerometers located on the static frames of the engines, where the accelerometers are mounted to provide a representative vibration signal of adequate amplitude to be monitored by the pilot and to provide warning of high vibration of the engine. Often, the ultimate source of the vibration of gas turbine engines is the rotor systems and particularly, out of balance of the rotor systems.

Turbo-shaft and turboprop engines can use torque sensor (e.g., magnetic torquemeter) devices to allow the engine output power and the maximum engine torque output to be monitored and controlled. For example, non-contact high frequency torque sensor technology, such as magnetolastic or magnetostrictive torque sensors, can be used for these purposes.

Variable displacement torque sensors rely on twist of the shaft to detect the torque. Use of variable displacement torque sensor sensors can affect the system design; for instance, use of variable displacement sensors can result in longer shafts of lower stiffness than would otherwise be used in an optimal system, and thereby reduce the natural torsional frequency of the rotor system. Strain gauge torsional sensors have the disadvantage of being mounted on rotational components, and lack of an easy and reliable means to transfer the torque signal form the rotor to static electronics. Further, conventional torque sensors may use electrical sensors that are limited in the temperature they can withstand.

Many events that are commonly experienced by gas turbine engines used in aircraft and other vehicles (e.g., fan bird strike, compressor surge, rotor blade or shaft rub, shaft failure, torsional vibrations, once per revolution excitations, and high frequency torsional cycles), can be more effectively monitored and detected by a high frequency-capable torque sensor (e.g., a high frequency torquemeter), as disclosed herein.

Gas turbines that would benefit from the use of a high frequency capable torque measurement system to detect events include turboprops, turboshafts and turbofan applications. While the description may refer primarily to gas turbine engine embodiments, it should be understood that the system and techniques disclosed herein are also applicable to, e.g., reciprocating diesel engines, gasoline and natural gas engines, electrical drive systems using at least one electrical motor or at least one electric generator, hydraulic drive systems using at least one hydraulic pump or at least one hydraulic motor (where the hydraulic fluids can include fuel, oil, hydraulic fluid or other hydrocarbon fluid or water or water based fluids), and/or other systems that include one or more engines that have output shafts that are physical coupled together so that the engine rotors are interconnected.

The torque sensor can be a non-contact sensor to avoid impacting the rotational system through the measurement. The torque sensors used by the technology disclosed herein may be embodied as, for example, magneto-lastic torquemeters, eddy current-based displacement torquemeters, VR-based displacement torque sensors, Hall effect displacement torque sensors, MEMS (microelectromechanical) torque sensors (wired or wireless), or strain gauges configured for torque measurement (wired or wireless).

The torque sensor can be embodied with the torque sensing element mounted on the rotor, for example as a strain gauge torque-measurement, with other sensors embedded in the rotor such that the output signal is transmitted to non-rotating electronics either via a slip ring or wirelessly. In some embodiments, the torque sensor can also be of the torsional displacement type where twist is measured for a section of the shaft which is proportional to the applied torque based on the elasticity of the section of the shaft. However, a torsional displacement torque sensor may impact the natural frequency of the rotor and may increase the length of the engine output shaft. A torque sensor that is also able to measure low frequency torque can be used to monitor and control low frequency and steady state engine output torque and power, in addition to monitoring high frequency torque. As used herein, terminology such as "torque-meter," "torquemeter," "torque sensor," "high frequency-capable torque measurement system," "high frequency-capable torque sensor," "high frequency torque sensor," and similar terminology may refer to, among other things, any type of sensor, instrument, or device that is capable of measuring torque produced by a rotating component at a high frequency. As used herein, "high frequency" may refer to, among other things, frequencies in the range of greater than about 100 Hertz (Hz). In some embodiments, "high frequency" may refer to frequencies in the range of about 100 Hz to about 200 Hz. In some embodiments, "high frequency" may refer to, among other things, frequencies in a range of up to about 5 kiloHertz (kHz) or higher, or frequencies in a range of up to about 50kHz.

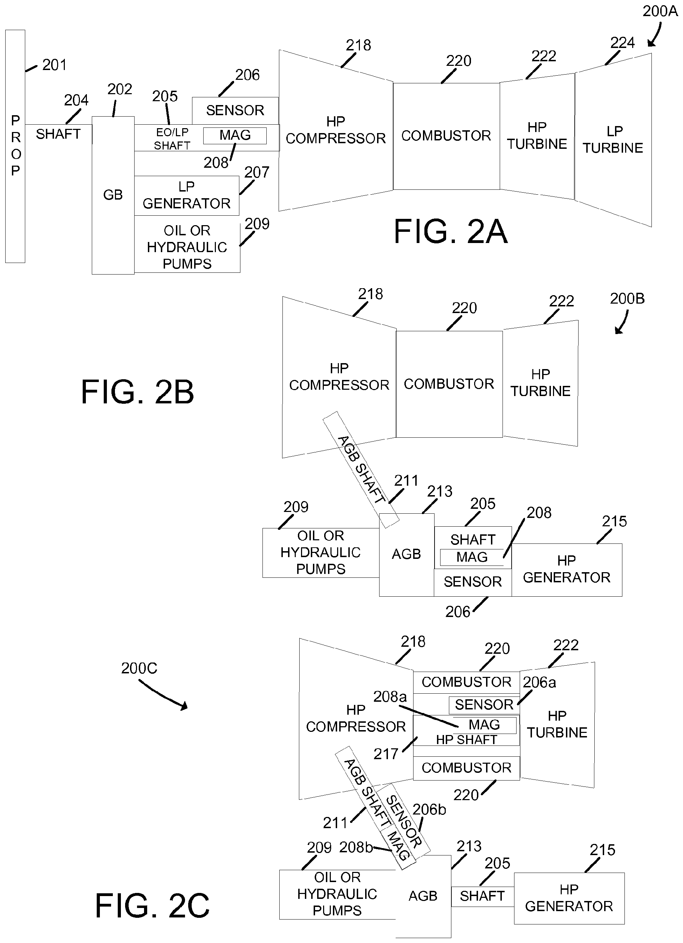

The disclosed high frequency-capable torque sensor can be designed to be mounted in a number of locations on a rotor of a gas turbine engine including, but not limited to, the options shown in FIGS. 2A-2F. As used herein, "rotor" may refer to, among other things, a rotating component (e.g., an output shaft) of the gas turbine engine, which may drive, e.g., a turbine, a compressor, a fan, an auxiliary gearbox, etc. of the gas turbine engine. The location on the shaft at which torque is sensed can be a portion of the shaft that is identified as providing the requisite measurable output. For example, the torque measurement area of the shaft may be such that the shear stress of the shaft at that location is of an appropriately measurable magnitude to provide changes in magnetic flux that can be sensed by magnetic sensing sensors, for example, magnetic coils, which are mounted in close proximity to and with minimal gap variation to the shaft. Alternatively, the shaft may be designed to provide the requisite twist for torque measurement that measures angular displacement or torsional strain.

By processing of the frequency spectrum and time response waveforms extracted from the high frequency-capable torque sensor output, it is possible to identify numerous engine related events that have distinct characteristics. These characteristics can be influenced by the physical configuration and natural frequencies of the rotor.

Events on the low pressure (LP) rotor, for example fan or propeller bird strike, can result in a torque disturbance anywhere on the LP rotor including propeller or fan drive shafts, prop gearbox, for a turboprop, LP driven accessory shafts, engine LP drive shaft or LP turbine. The sensitivity at a given location will depend on the location relative to the source of the event being sensed and the effective inertia and damping in-between and the natural frequency of the rotor system. In addition, if the event caused torque direction reversal, then backlash in any gear system between the source of the event and the sensing element may become desirable to measure.

The torque sensor waveform or spectrum for any given event can be adapted based on the location of the source of torque for the event relative to the location of the torque sensing component on the rotor to account for effects of inertia and damping in the rotor system and natural frequencies of the rotor system.

Events on the high pressure (HP) rotor, for example compressor surge, will result in a torque disturbance anywhere on the HP rotor including compressor rotor, HP driven accessory gearbox drive shaft, accessory gearbox, accessories driven by the gearbox, engine HP shaft or engine HP turbine rotor.

A fan, propeller or compressor bird strike or ice impact or slug of water impact can be identified by sensing the torque anywhere on the fan rotor system. The characteristics of the response to this event are affected by the dynamics of the fan rotor and the location of the torque sensing section of the rotor. The most sensitive location to make this measurement is where the moment of rotational inertia between the fan or propeller and the sensing section of the shaft is minimized. In the event that the impact causes torque reversals then backlash of gears between the fan or propeller and the torque sensing section may be desirable to measure.

A compressor surge or compressor rotating stall can be identified by observing the torque anywhere in the compressor rotor system, i.e. compressor rotor, shaft, turbine rotor, accessory gearbox drive shaft, HP accessory gearbox, accessories driven by the HP accessory gearbox, engine HP shaft or HP turbine rotor.

A shaft break on a rotor can be identified by a torque sensor positioned on that rotor. A turbine or compressor blade rub can be identified by a high frequency torque sensor on rotor as it will cause a momentary drag torque. Failures of the gears and bearings can be identified using a high frequency torque sensor on the corresponding rotor. Failures of accessories or accessory drive shafts can be identified with a torque sensor on the accessory or accessory drive shaft rotor system by sensing of the torque impulse at the time of failure or by detecting a subsequent steady state torque change after the failure event. High frequency torsional oscillations on the rotor system as a result of electrical motor or electrical generator components can be identified with a torque sensor on the rotor system. Rotor misalignment can be identified based on high frequency torque measurement on the misaligned rotor. Turbine, compressor and propeller and fan blade failures can be identified by torque sensor measurement on the corresponding rotor; for example, fan blade out. Torsional oscillations can be identified by measuring torque on the rotor, for example, oscillations at the natural frequency due to control system disturbances.

Torsional oscillations at damaging frequencies can be identified, measured by a high frequency-capable torque sensor mounted to a rotor system as disclosed herein, and an accumulated total number of cycles can be stored for, e.g., engine life and health management. Examples include, managing incompressible fluid pump health (e.g., by monitoring gear passing torsional vibrations), or for incompressible fluid pump inlet cavitation (e.g., by monitoring the rotor torsional vibrations), or for identifying, handling, or transient bleed valve, cooling air valve and customer air bleed valve position and health (e.g., by monitoring the torsional signature on the rotor attached to the compressor providing the bleed air).

Applications of the high frequency-capable torque sensor as disclosed herein can identify damaging torsional oscillations and cause the engine control to react accordingly to avoid or minimize these oscillations (e.g., by changing engine speed or engine variable geometry, for example, variable stator vanes, changing bleed valve flow, including handling, ECS (environmental control system) bleed valves, and cooling bleed valves, using modulating or on-off valve or by altering engine accessory loads, for example, electrical generators or hydraulic pumps.

In any of the foregoing applications and/or other applications, time response analysis can be used to identify events by identifying the appropriate torque waveform in the time domain. The waveform can be sampled using digital electronics at a rate to allow adequate details to be extracted over an adequate time interval.

In any of the foregoing applications and/or other applications, frequency response analysis can be used to identify events by identifying the appropriate frequency response spectrum. The waveform can be sampled at a rate to provide adequate bandwidth for a fast Fourier transform (FFT), typically sampling 10 to 20 times faster than the highest frequency of interest. The fast Fourier transform is then compared relative to the frequency characteristics of the event for an appropriate time period (where the appropriate time period and frequency characteristics are determined by the event of interest).

The positive identification of events by the disclosed high frequency-capable torque sensor systems can lead to one or more of the following automatic responses by the control and monitoring system, including: automatic accommodation response by the control system to allow ongoing system operation, annunciation to the pilot to allow appropriate pilot action in response to the event, and/or annunciation to the maintenance or ground operation personnel to allow appropriate maintenance action or other vehicle or fleet management activities. Alternatively or in addition, data output by the high frequency-capable torque sensor system can be recorded or transmitted to enable the appropriate health and trend monitoring of the engine based on the identified events, and/or system or engine life management.

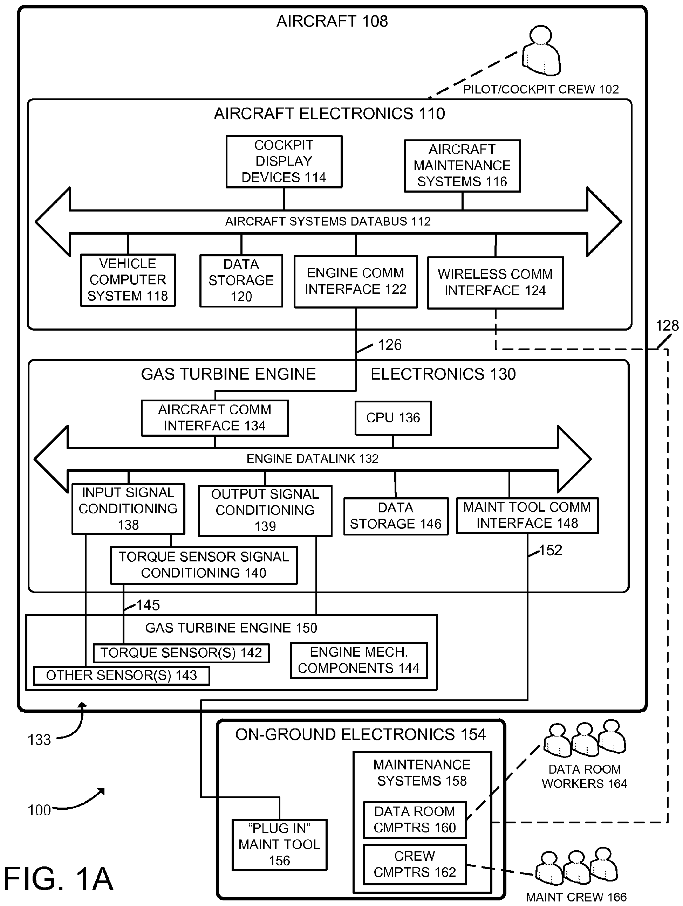

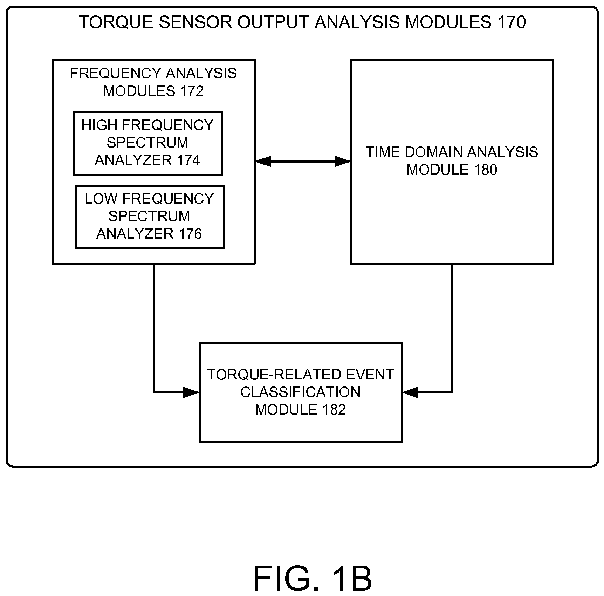

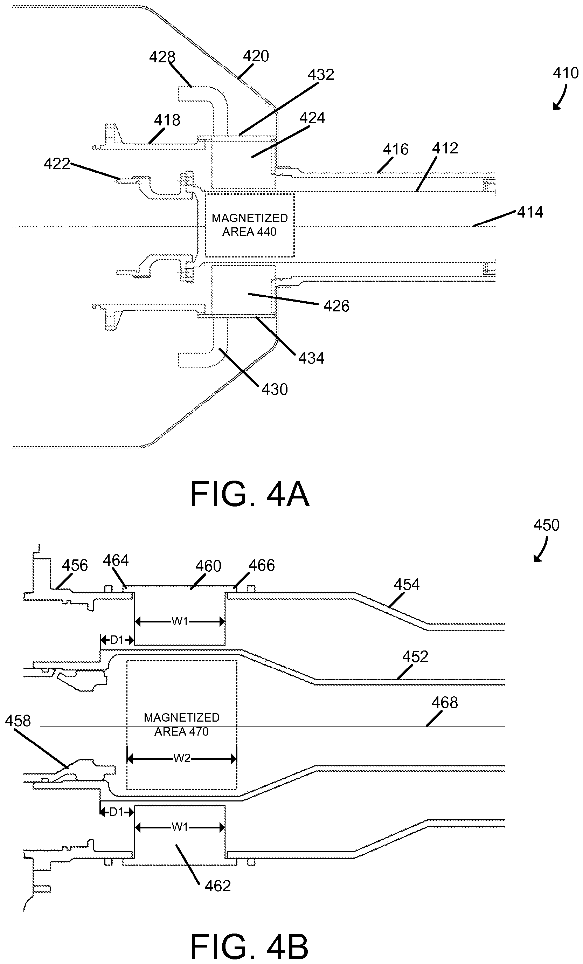

Referring now to FIG. 1, an embodiment of an aircraft monitoring system 100, including a torque monitoring system 133, is shown. The illustrative aircraft monitoring system 100 includes, on board an aircraft 108, aircraft electronics 110, gas turbine engine electronics 130, and a gas turbine engine (e.g., physical/mechanical components) 150. Electrical and/or mechanical components of the aircraft 108 can be communicatively coupled to one or more components of on-ground electronics 154. For example, the aircraft electronics 110 and the gas turbine engine electronics 130 can communicate with the on-ground electronics 154 during in-air operation of the aircraft 108 and/or when the aircraft 108 is on the ground (e.g., in between missions or during maintenance), using any suitable form of communication technology (e.g., wired, wireless, optical, etc.). The gas turbine engine 150 includes one or more torque sensors 142, other sensors 143, and engine mechanical components 144. As shown by the illustrative embodiments of FIGS. 2A-2F, each of the torque sensor(s) 142 is coupled to a rotating component of the gas turbine engine 150, such as a shaft. The torque sensor(s) 142 can be mounted at any of a number of different locations on the rotating component of the gas turbine engine 150. For example, the torque sensor(s) 142 may be configured for mounting on one or more output drive shafts. Illustrative examples of torque sensor mounting configurations are shown in FIGS. 4A and 4B, described below.

Output of the illustrative torque sensor 142 is processed by a torque sensor signal conditioning module 140, which may be placed close to the torque sensor 142. The conditioned torque sensor output from the torque sensor signal conditioning module 140 is then communicated via an optional input signal conditioning module 138 to an engine datalink (or "data bus") 132, which communicates the conditioned torque sensor output to other components of the gas turbine engine electronics 130, including an aircraft communication interface 134, a central processing unit 136, a data storage device 146, and a maintenance tool communication interface 148. The maintenance tool communication interface 148 may communicate with a "plug in" maintenance tool 156 (e.g., when the aircraft 108 is on the ground), by a communication link 152 such that the maintenance tool 156 can be used to provide torque related maintenance data to the test crew.

The torque sensor signal conditioning module 140 (and optionally, input signal conditioning module 138) process the output signals of the torque sensor 142 and the other sensors 143, and convert those signals to a form that can be used by other components of the aircraft monitoring system 100. For example, each or either of the signal conditioning modules 138, 140 may include an analog to digital converter (ADC), an amplifier, one or more filters, a digital signal processor, and/or other signal processing components as needed according to a particular design of the system 100. The gas turbine engine electronics 130 also include an output signal conditioning module 139 coupled to the data bus 132, which processes turbine engine commands and sends command signals to the gas turbine 150.

The aircraft communication interface 134 can communicate torque sensor output and/or related information (e.g., data and/or control signals) to the aircraft electronics 110 via a communication link 126 with an engine communication interface 122. The engine communication interface 122 can communicate torque sensor output and/or related information (e.g., data and/or control signals) to other components of the aircraft electronics 110, including one or more cockpit display devices 114, one or more aircraft maintenance systems 116, a vehicle computer system 118, a data storage device 120, and a wireless communication interface 124. The wireless communication interface 124 can communicate with one or more of the on-ground maintenance systems 158, via any suitable form of wireless communication link 128.

During operation of the aircraft 108, a pilot or other cockpit crew member 102 may interactively utilize one or more of the aircraft electronics 110. For example, output of the torque sensor 142 and/or information relating thereto may be displayed on a cockpit display device 114. On the ground, one or more data room workers 164 and/or members of an aircraft maintenance crew 166 may interactively view and/or process torque sensor output and/or information relating thereto, via, e.g., data room computers 160 and/or maintenance crew computers 162 that communicate to an aircraft wireless comm interface 124 via a wireless link 128.

As should be understood, the various components of the aircraft monitoring system 100 can be embodied as one or more computing devices and/or electrical circuitry (e.g., hardware, software, firmware, or a combination thereof). Each or any such processing component, e.g., the CPU 136, the aircraft maintenance systems 116, the vehicle computer system 118, the maintenance systems 158, and/or the plug in maintenance tool 156, may be embodied as any type of circuitry, device, or combination thereof, for performing the functions described herein. For example, the CPU 136 may be embodied as a full authority digital electronic computer (FADEC), electronic engine controller (EEC), engine control unit (ECU), Engine Health Monitoring Unit or Engine Monitoring Unit (EHM or EMU) and/or any other computing device or system configured to perform the functions described herein. Accordingly, each such component may include: a processor (e.g., any type of processor capable of performing the functions described herein, including a multi-core processor or processing/controlling circuit, digital signal processor, etc.); an input-output (I/O) subsystem (e.g., circuitry and/or components to facilitate input/output operations with a processor, memory, and other components of the system 100, such as memory controller hubs, input/output control hubs, firmware devices, communication links (i.e., point-to-point links, bus links, wires, cables, light guides, printed circuit board traces, etc.), and/or other components and subsystems to facilitate the input/output operations); a data storage device (e.g., data storage devices 120, 146) (e.g., any type of physical device or devices configured for short-term or long-term storage of data such as, for example, memory devices and circuits, memory cards, hard disk drives, solid-state drives, flash memory or other read-only memory, memory devices that are combinations of read-only memory and random access memory, or other data storage devices); sensors (e.g., any suitable type of sensor capable of performing the functions described herein, including torque sensors, speed sensors, pressure sensors, etc.); and memory (e.g. any type of volatile or non-volatile memory or data storage capable of performing the functions described herein to e.g., store various data and software used during operation of the system 100, as well as any necessary operating systems, applications, programs, libraries, and drivers).

The system 100 or any of its components may include a number of additional devices to facilitate user interaction with the system 100, including physical or virtual control buttons or keys, a microphone, a speaker, a display device, and/or others. For example, a display device may be embodied as any type of display capable of displaying digital information such as a liquid crystal display (LCD), a light emitting diode (LED), a cathode ray tube (CRT), or other type of display device. In some embodiments, the display device may be coupled to a touch screen or other human-computer interface device to allow user interaction with a component of the system 100.

The system 100 includes communication components (e.g., databus 112, interfaces 122, 124, 134, 148, datalink 132, communication links 126, 128, 152, etc.), each of which may be embodied as any communication circuit, device, or collection thereof, capable of enabling communications between the various components of the system 100 and/or other electronic devices. The communication components may be configured to use any one or more communication technology (e.g., wireless, optical, or wired communications) and associated protocols (e.g., radio frequency (RF), cellular, Ethernet databus, RS485 databus, ARINC (Aeronautical Radio, Inc.) databus, CAN (Controller Area Network) databus, BLUETOOTH, WIFI, Near Field Communication, etc.) to effect such communication. Portions of the communication components may be embodied as network adapters, including wireless network adapters.

The illustrative aircraft monitoring system 100 also includes a number of computer program components, such as the torque sensor output analysis modules 170, described below. The torque sensor output analysis modules 170 may be individually or collectively embodied as any suitable form of computer application (e.g., software, firmware, hardware, or a combination thereof), including an interactive or "front end" application that interacts directly or indirectly with an end user via, for example, a display device or another user interface component, and/or "back end" applications that process data and/or instructions and interface primarily with front end applications. The system 100 may include other or additional components, such as those commonly found in a mobile and/or stationary computer. Additionally, in some embodiments, one or more of the illustrative components may be incorporated in, or otherwise form a portion of, another component.

The torque monitoring system 133 receives, monitors, processes, and analyzes torque signals output by the torque sensor 142. Portions of the illustrative torque monitoring system 133 are embodied as a plurality of computer-executable torque sensor analysis modules 170 (e.g., hardware, software, firmware, or a combination thereof). The illustrative torque sensor output analysis modules 170 include frequency analysis modules 172 (which include a high frequency spectrum analyzer 174 and a low frequency spectrum analyzer 176), a time domain analysis module 180, and a torque-related event classification module 182. The illustrative torque sensor output analysis modules 170 may be embodied in one or more components of the aircraft monitoring system 100. For example, portions of of the modules 170 may be embodied in one or more components of the aircraft electronics 110 (e.g., the aircraft maintenance systems 116), the gas turbine engine electronics 130 (e.g., the signal conditioning modules 138, 140), and/or the on-ground electronics 154 (e.g., the maintenance systems 158 or maintenance tool 156).

The illustrative torque sensor output analysis modules 170 utilize a combination of frequency domain analysis and time domain analysis techniques to interpret the torque signals output by the torque sensor(s) 142, and identify and classify torque-related events evidenced by the torque sensor output. Depending on the interpretation of the torque signals, the torque monitoring system 133 can cause a number of different actions to occur within the turbine engine 150 or external to the turbine engine 150. For example, the torque monitoring system 133 may cause the gas turbine engine electronics 130 to automatically adjust an operating parameter of the gas turbine engine 150. Alternatively or in addition, the torque monitoring system 133 may issue various electronic notification signals, e.g., to a cockpit display device 114 or to a maintenance system located on the ground (e.g., one or more of the maintenance systems 158 or the plug in maintenance tool 156), in response to torque-related events detected by the torque monitoring system 133.

Referring now to FIG. 2A, an embodiment 200A of a gearbox arrangement for the gas turbine engine components 150 is shown. The embodiment 200A is a 2-spool turboprop engine with a torque sensor 206 located on an engine output shaft/ low pressure (LP) shaft 205. In the embodiment 200A, a propeller 201 is coupled to a propeller shaft 204, which is coupled to a component of a propeller gearbox 202 (the component to which the propeller shaft 204 is coupled is omitted from the figure). Components of the gearbox 202 drive the engine output/LP shaft 205, an LP generator 207, and one or more oil and/or hydraulic pumps 209. The engine output/LP shaft 205 is driven by an LP turbine 224. The engine 200A also includes a high pressure (HP) compressor 218, a combustor 220, and a high pressure turbine 222, which are axially aligned and driven by concentric shafts. For instance, the HP compressor 218, combustor 220, and HP turbine 222 may be coupled to and rotatable with an HP shaft, which may be concentric with the engine output/LP shaft 205. The engine output/LP shaft 205 has a magnetized portion 208. The magnetized portion 208 may be established by, for example, imprinting a magnetic target onto the (e.g., ferromagnetic) output/LP shaft 205. The torque sensor 206 is positioned adjacent to the magnetized portion 208 of the shaft 205, between the gearbox 202 and the HP compressor 218. The illustrative torque sensor 206 is positioned in close proximity to the magnetized portion 208 without physically contacting the magnetized portion 208. For example, the torque sensor 206 may be positioned within a range of about 2 millimeters of the outer surface / outer diameter of the output shaft. In some embodiments, the torque sensor 206 may be embodied as a magnetic sensing coil.

Referring now to FIG. 2B, an embodiment 200B of a gearbox arrangement for the gas turbine engine components 150 is shown. The embodiment 200B is an illustrative HP spool for a gas turbine engine (e.g., a turboshaft, turboprop or turbofan engine). In the embodiment 200B, the HP compressor 218, combustor 220 and HP turbine 222 are axially aligned as in FIG. 2A. An auxiliary gearbox shaft 211 is driven by the HP compressor 218 and connects with an auxiliary gearbox 213. Components driven by the auxiliary gearbox 213 include oil or hydraulic pumps 209, an output shaft 205 (in this case, an auxiliary gearbox output shaft), and an HP generator 215. In the embodiment 200B, the torque sensor 206 is positioned adjacent the magnetized portion 208 of the shaft 205, between the auxiliary gearbox 213 and the HP generator 215.

Referring now to FIG. 2C, an embodiment 200C of a gearbox arrangement for the gas turbine engine components 150 is shown. The embodiment 200C is another arrangement of an HP spool for a gas turbine engine such as a turboshaft, turboprop, or turbofan engine. In the embodiment 200C, the HP compressor 218, combustor 220, and HP turbine 222 are axially aligned. An HP shaft 217 couples the HP compressor 218 with the HP turbine 222. An auxiliary gearbox shaft 211 is driven by the HP compressor 218. The auxiliary gearbox shaft 211 connects with an auxiliary gearbox 213, which drives one or more oil or hydraulic pumps 209 and an auxiliary gearbox output shaft 205. An HP generator 215 is driven by the shaft 205. Torque sensors 206a and 206b are mounted adjacent to magnetized portions 208a of the HP shaft 208b and the auxiliary gearbox shaft 211, respectively.

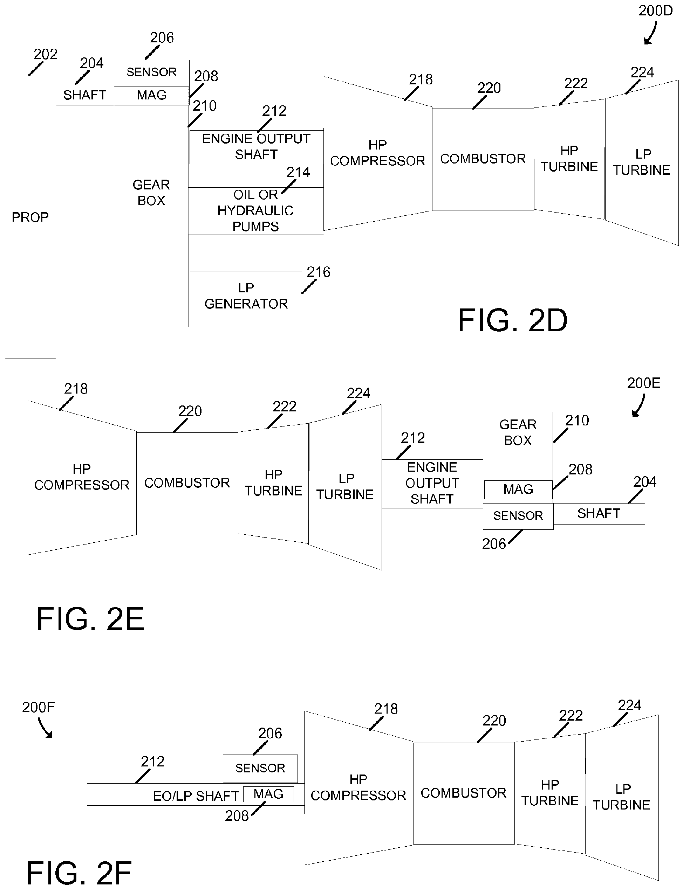

Referring now to FIG. 2D, an embodiment 200D of a gearbox arrangement for the gas turbine engine components 150 is shown. The embodiment 200D is a 2-spool turboprop engine with a torque sensor 206 positioned in a propeller gearbox 210, adjacent a magnetized portion 208 of a shaft (not shown) that is directly connected to the propeller shaft 204. In the arrangement 200D, the gearbox 210 drives an engine output shaft 212, one or more oil or hydraulic pumps 214, and an LP generator 216. The HP compressor 218, combustor 220, HP turbine 222, and LP turbine 224 are axially aligned with the engine output shaft 212.

Referring now to FIG. 2E, an embodiment 200E of a gearbox arrangement for the gas turbine engine components 150 is shown. The embodiment 200E is a 2-spool turboshaft for a helicopter, with the torque sensor 206 positioned in the power gearbox 210 on the engine output shaft 212 (which is not the same as the LP shaft, in this case). In the arrangement 200E, the HP compressor 218, combustor 220, HP turbine 222, and LP turbine 224 are axially aligned with the engine output shaft 212. The engine output shaft 212 is connected to a shaft 204 in the power gearbox 210. The torque sensor 206 is mounted adjacent a magnetized portion 208 of the shaft 212, as described above.

Referring now to FIG. 2F, an embodiment 200F of a gearbox arrangement for the gas turbine engine components 150 is shown. The embodiment 200F is a 2-spool turboshaft engine with the torque sensor 206 positioned on the engine output/LP shaft 212 adjacent a magnetized portion 208 of the shaft 212. In the arrangement 200F, the HP compressor 218, the combustor 220, the HP turbine 222, and the LP turbine 224 are axially aligned with the engine output/LP shaft 212.

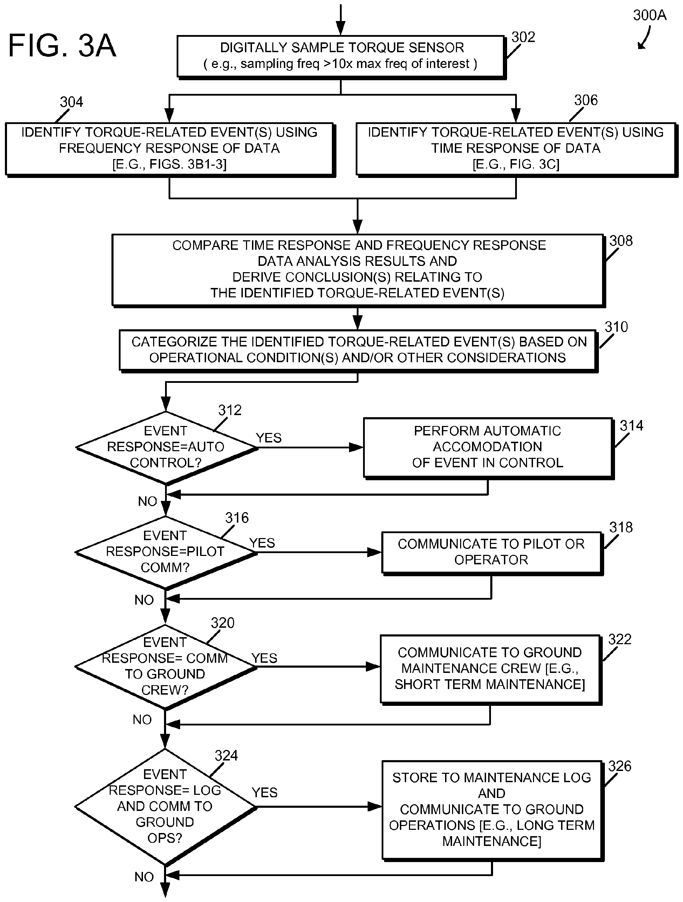

Referring now to FIG. 3A, an illustrative method 300A that may be executed by the gas turbine engine electronics 130 (e.g., by the torque sensor output analysis modules 170 of the torque monitoring system 133) and/or other components of the aircraft monitoring system 100 is shown. Aspects of the method 300A may be embodied as electrical circuitry, computerized programs, routines, logic and/or instructions. The illustrative method 300A can executed by the system 100 in real time during normal operation of a turbine engine-powered vehicle or in an offline environment (e.g., during engine testing or aircraft maintenance).

In block 302, the system 100 digitally samples the output of the torque sensor(s) 142. Illustratively, the sampling rate used by the system 100 is in the range of greater than about ten times the maximum frequency of interest, where the "frequency of interest" is a frequency that is indicative of a torque-related event for which monitoring is desired. The system 100 then proceeds to execute the processes of block 304 and/or block 306. Portions of blocks 304 and 306 may be executed concurrently or sequentially in accordance with the requirements of a particular design of the system 100.

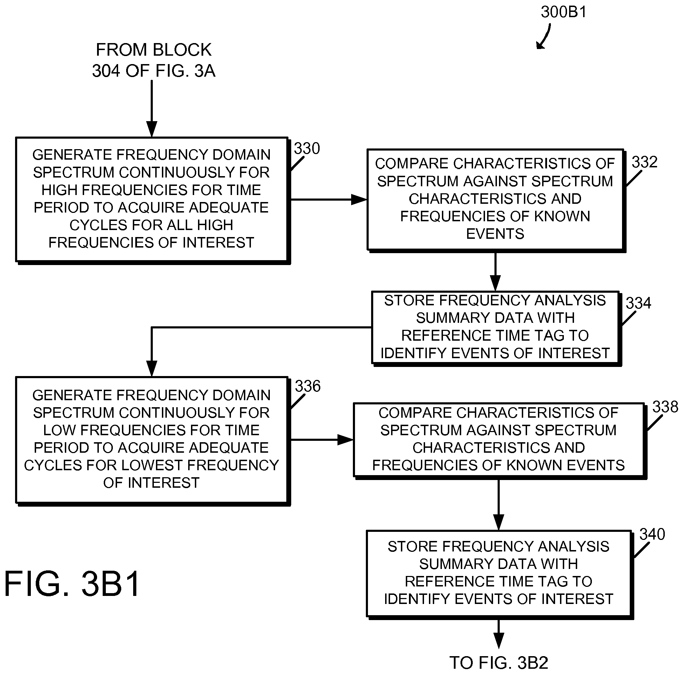

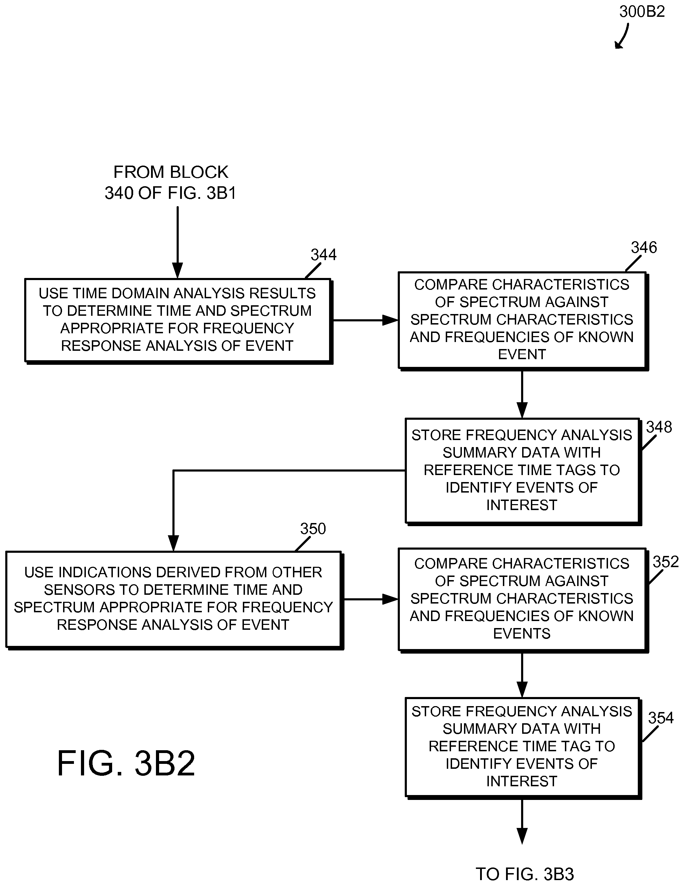

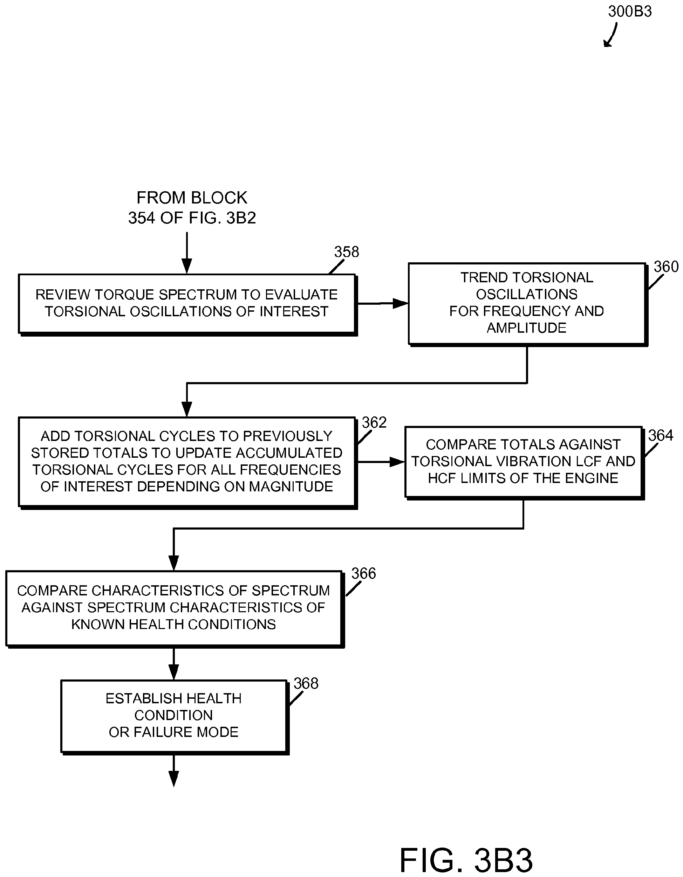

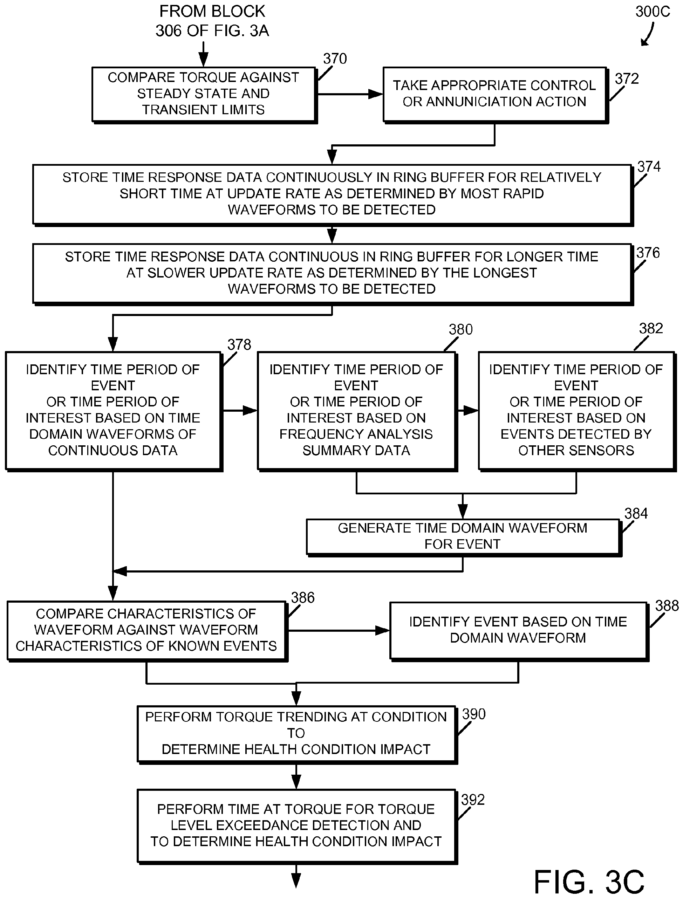

In block 304, the system 100 identifies torque-related events evidenced by the torque sensor output using the frequency response of the data. As such, the system 100 converts the torque sensor output to a frequency domain representation using, e.g., one or more fast Fourier transforms. Details of the illustrative frequency domain analysis performed in block 304 are further explained below with reference to FIGS. 3B1, 3B2, and 3B3. In block 306, the system 100 identifies torque-related events evidenced by the torque sensor output using the time response of the data. Details of the illustrative time domain analysis performed in block 306 are further explained below with reference to FIG. 3C.

In block 308, the system 100 utilizes the results of the analyses performed in blocks 304 and/or 306 (e.g., a combination of the results of blocks 304 and 306) to algorithmically generate conclusions relating to the torque-related events identified in blocks 304 and/or block 306. For example, in block 308, the system 100 may compare the time response and frequency response data analysis results obtained in blocks 304 and 306 to known patterns or threshold values that are indicative of various torque-related events. In block 310, the system 100 categorizes the torque-related events identified in block 304 and/or block 306, based on the current operational conditions of the gas turbine engine 150, other components of the aircraft 108, other operational conditions or factors, and/or other relevant considerations. For instance, the system 100 may categorize a torque-related event utilizing rules or logic designed to cause the system 100 to respond appropriately to the torque-related event based on requirements of the aircraft 108, the current aircraft mission, environmental or operational factors, and/or other considerations. Illustrative examples of the categorization of the torque-related event are shown by blocks 312, 316, 320, and 324. For instance, in block 312, if the torque-related event categorization performed in block 310 indicates that the appropriate response is automatic control, in block 314 the system 100 performs automatic accommodation of the torque-related event in one or more of the control algorithms of the gas turbine engine electronics 130 and/or other control systems of the aircraft 108. In block 316, if the torque-related event categorization performed in block 310 indicates that the appropriate response is communication to the aircraft pilot or other aircraft operator, in block 318 the system 100 transmits the appropriate communication to the pilot or other relevant personnel (e.g., by electronic messaging, or display of a notification on a cockpit display device 114). In block 320, if the torque-related event categorization performed in block 310 indicates that the appropriate response is communication to one or more members of a ground crew (e.g., a maintenance crew), in block 322 the system 100 transmits the appropriate communication to the ground crew or other relevant personnel (e.g., by electronic messaging, or display of a notification on a display device of a maintenance system 158). In block 324, if the torque-related event categorization performed in block 310 indicates that the appropriate response is to log the event data (e.g., store in a log file or searchable database) and communicate the event to ground operations, in block 326 the system 100 stores the event data to, e.g., a maintenance log stored in a data storage device 120, 146), and transmits the appropriate communication to the ground operations or other relevant personnel (e.g., by electronic messaging, or display of a notification on a display device of a maintenance system 158 used for long term maintenance). It should be understood that the various actions that may be taken by the system 100 at blocks 314, 318, 322, 326 need not be mutually exclusive, nor need they be performed in a sequential manner. Any of such actions may be performed by the system 100 concurrently and/or in any order that is suitable as may be determined by the requirements of a particular design of the system 100.

Referring now to FIGS. 3B1, 3B2, AND 3B3, an illustrative method 300B1, 300B2, 300B3 that may be executed by the gas turbine engine electronics 130 (e.g., by the frequency analysis modules 172 of the torque monitoring system 133) and/or other components of the aircraft monitoring system 100, in order to perform the functionality of block 304 of FIG. 3A, is shown. Aspects of the method 300B1, 300B2, 300B3 may be embodied as electrical circuitry, computerized programs, routines, logic and/or instructions. The illustrative method 300B1, 300B2, 300B3 can executed by the system 100 in real time during normal operation of a turbine engine-powered vehicle or in an offline environment (e.g., during engine testing or aircraft maintenance).

Referring to FIG. 3B1, the process of block 304 of FIG. 3A begins at block 330 of FIG. 3B1. In block 330, the system 100 generates the frequency domain spectrum substantially continuously (e.g., updates the frequency spectrum as new output is received from the torque sensor(s) 142), for high frequencies, for a given time interval, where the "high" frequencies and the time intervals are selected or defined to be sufficient to capture an adequate number of frequency cycles for each and all of the high frequencies of interest. As such, the frequency spectrum generated in block 330 will vary depending on the particular application and torque-related events desired to be monitored. For example gear tooth passing could be in the range 5000 to 10000 Hz, fluid pump frequencies could be in the range 1000 - 5000 Hz.

In block 332, the system 100 compares the characteristics of the high frequency spectrum generated in block 330 to high frequency spectrum characteristics and corresponding high frequencies that are known to be associated with particular torque-related events (e.g., as a result of experimentation or analysis of historical data). The characteristics of the spectrum include the number of natural frequencies, their amplitudes and the frequencies of these resonances. In block 334, the system 100 generates and stores high frequency analysis summary data with reference time tags identifying events of interest in the frequency spectrum. For example, the system 100 may select a subset of the data produced in blocks 330 and 332 and add, e.g., meta tags or Extensible Markup Language (XML) tags to the data identifying characteristics of interest.

In blocks 336, 338, and 340, the system 100 performs processes similar to those described above with respect to blocks 330, 332, 334, but with frequency spectrum for low frequencies, below about 50 Hz. For instance, in block 336, the system 100 generates the low frequency domain spectrum substantially continuously (e.g., updates the low frequency spectrum as new output is received from the torque sensor(s) 142), for low frequencies, for a given time interval, where the "low" frequencies and the time intervals are selected or defined to be sufficient to capture an adequate number of frequency cycles for each and all of the low frequencies of interest. As such, the low frequency spectrum generated in block 336 will vary depending on the particular application and torque-related events desired to be monitored. For example to observe torsional resonances of gas turbine LP systems or accessory drive train for the lowest torsional natural frequency of the rotor system in the range 30 - 40 Hz it would take about 0.3 seconds to capture 5 cycles to confirm the presence of frequencies in this range. In block 338, the system 100 compares the characteristics ,for example the frequency, amplitude and Q-factor or width of the lowest natural frequency resonance, of the low frequency spectrum generated in block 336 to low frequency spectrum characteristics and corresponding low frequencies that are known to be associated with particular torque-related events (e.g., as a result of experimentation or analysis of historical data). In block 338, the system 100 generates and stores low frequency analysis summary data with reference time tags identifying events of interest in the low frequency spectrum. For example, the system 100 may select a subset of the data produced in blocks 336 and 338 and add, e.g., meta tags or Extensible Markup Language (XML) tags to the data identifying characteristics of interest.

The process of FIG. 3B1 continues with block 344 of FIG. 3B2. Referring now to FIG. 3B2, in block 344, the system 100 utilizes the results of the time domain analysis performed in block 306 of FIG. 3A to determine a time interval and frequency spectrum that are appropriate for a frequency response analysis for a particular torque-related event. As such, the processes of blocks 304 and 306 of FIG. 3A may be interconnected and/or iterative, in some embodiments. In block 346, the system 100 compares one or more characteristics of the frequency spectrum determined to be of interest in block 344 against frequency spectrum characteristics and frequencies that are known to be associated with particular torque-related events. In block 348, the system 100 tags frequency analysis summary data (e.g., a subset of data generated in blocks 344, 346), with reference time tags to identify events of interest, and stores the tagged frequency analysis summary data in computer memory (e.g., a data storage device 120, 146).

In block 350, the system 100 receives "context" data from other sensors of the aircraft 108 (e.g., fuel, speed, pressure, and/or other sensors), and utilizes the output from one or more such other sensors to determine a time interval and frequency spectrum of interest that is appropriate for a frequency analysis of a particular event desired to be monitored. For example, the current operational context of the aircraft 108 or more particularly the gas turbine engine 150, as indicated by the other-sensor output, may indicate that frequency analysis should be performed for a certain time interval and frequency spectrum, in order to analyze the presence or absence of a particular event. In block 352, the system 100 compares one or more characteristics of the frequency spectrum determined or selected in block 350 to frequency spectrum characteristics and frequencies that are known to be associated with the types of events for which monitoring is desired. In block 354, the system 100 tags frequency analysis summary data (e.g., a subset of the data generated in blocks 350, 352) with reference time tags to identify events of interest in the data, and stores the data in computer memory (e.g., a data storage device 120, 146).

The process of FIG. 3B2 continues with block 358 of FIG. 3B3. Referring to FIG. 3B3, in block 358, the system 100 reviews torque spectrum data in order to identify and evaluate torsional oscillations of interest. In block 360, the system 100 generates a trend (e.g., monitors changes over time) of the torsional oscillations of interest at a particular frequency and amplitude, for example a gear fuel pump tooth passing frequency or torsional natural frequencies of the rotor. In block 362, the system 100 periodically or substantially continuously adds torsional cycles to previously stored totals, in order to update the accumulated torsional cycles over time, for all frequencies of interest, and categorized based on the magnitude of the vibration. In block 364, the system 100 compares the totals computed in blocks 360, 362 against known information about torsional vibrations associated with low cycle fatigue (LCF) and high cycle fatigue (HCF) limits of the turbine engine 150 (e.g., in order to assess the presence or absence of a torque-related event indicative of LCF or HCF). In block 366, the system 100 compares one or more characteristics of the torque spectrum evaluated in block 358 against one or more torque spectrum characteristics known to be associated with one or more particular engine health conditions. Based on the comparison(s) performed in block 366, the system 100 in block 368 determines a current health condition or failure mode of the gas turbine engine 150.

The process of block 306 of FIG. 3A is described in more detail with respect to FIG. 3C. Referring now to FIG. 3C, an illustrative method 300C that may be executed by the gas turbine engine electronics 130 (e.g., by the time domain analysis module 180 of the torque monitoring system 133) and/or other components of the aircraft monitoring system 100, in order to perform the functionality of block 306 of FIG. 3A, is shown. Aspects of the method 300C may be embodied as electrical circuitry, computerized programs, routines, logic and/or instructions. The illustrative method 300C can executed by the system 100 in real time during normal operation of a turbine engine-powered vehicle or in an offline environment (e.g., during engine testing or aircraft maintenance).

In block 370, the system 100 receives and compares the currently sampled torque (i.e., the output of the torque sensor(s) 142) to steady state and transient torque limits that are known to be associated with one or more torque-related events. In block 372, the system 100 takes the appropriate annunciation or control action (e.g., modifying a parameter of a control algorithm or transmitting a notification) in response to the comparison performed in block 370. Of course, if the comparison of block 370 does not indicate that a torque-related event of interest has occurred, the system 100 may take no action in block 372.

In block 374, the system 100 stores portions of the time response data received in block 370 substantially continuously (e.g., as the torque output of the sensor 142 is sampled) at least temporarily in computer memory (e.g., in a ring buffer), for a relatively short period of time, at an updated rate that is determined by the most rapid waveforms desired to be detected, for example a time response waveform for a highly damped torque impulse caused by a bird strike, ice slab or water slug hitting one of the rotor blades or a damaged gear tooth may last 10 milliseconds (ms) or less. Another example is the detection of an engine failure or component shaft failure that could be performed in less than 5 ms to determine a loss of load condition that would require immediate fuel shutoff or other control action to prevent rotor or engine over-speed. In block 376, the system 100 stores portions of the time response data received in block 370 at least temporarily in computer memory (e.g., in a ring buffer), for a relatively longer period of time, at a slower update rate, as determined by the longest waveforms desired to be detected, for example to establish torsional damping of low frequency torsional oscillations at 3 Hz would require a time period of 3 seconds to capture about 10 cycles and obtain the damping ratio for an under-damped system.

In block 378, the system 100 identifies a time period of an event detected in block 370 or another time period of interest, based on the time domain waveforms of the continuous data stored in block 374 and/or 376. In block 380, the system 100 identifies a time period of an event detected in block 370 or another time period of interest, based on the frequency analysis summary data generated in block 304 of FIG. 3A (e.g., based on the reference time tags described above). In block 382, the system 100 identifies a time period of an event detected in block 370 or another time period of interest, based on one or more events detected by one or more of the other sensors of the aircraft 108 as described in blocks 350, 352 of FIG. 3B2.

With the output of blocks 380 and 382, the system 100 generates a time domain waveform for an event of interest, in block 384. With the output of block 384 and block 378, the system 100 compares one or more characteristics of the time domain waveform against one or more waveform characteristics known to be associated with the occurrence of one or more particular known torque-related events. In block 388, the system 100 identifies a torque-related event of interest based on the time domain waveform and the comparison performed in block 386. The system 100, can also performs a torque trending analysis at a desired operational condition based on steady state or oscillatory torque amplitude (e.g., a sensed condition), and determines (e.g., estimates, algorithmically) an impact on the condition of the engine 150 (e.g., a change in an engine health-related parameter), in block 390. Also as shown in block 392, the system 100 can also perform a "time at torque" analysis in order to determine torque level exceedance for a period of time (e.g., has torque exceeded a limit for more than a given period of time?), and determines (e.g., estimates, algorithmically) an impact on the condition of the engine 150 (e.g., a change in an engine health-related parameter). Another example would be to determine the cumulative total number of torsional cycles at the lowest natural frequencies of the rotor system for the range of amplitudes of concern to understand the impact of oscillations on the life of the shaft based to high cycle fatigue life.

Referring now to FIG. 4A, an embodiment of a gas turbine engine 410 includes an engine casing 420 (portions removed to show internal components). A shaft housing comprising an external housing 416 and an internal housing 418 are coupled to the engine casing 420. Within the housing 416, 418, a shaft 412 is coupled to and rotatable with a rotor 422 about an axis 414. Torque sensors 424, 426 are radially disposed about the shaft 412. In operation (e.g., during rotation of the shaft 412), the position of the torque sensors 424, 426 relative to magnetized surface area 440 of the shaft 412 produces torque output signals that can be communicated by electrical connectors 428, 430 to e.g., an engine control unit or engine health monitoring unit, as described above, and processed and analyzed as described herein. Each of the torque sensors 424, 426 is mounted to the housing 418, 416 by mounting bolts (not shown) with shim (and corresponding seal) 432, 434, respectively. In the embodiment 410, the torque sensors 424, 426, the shims and seals 432, 434, and the electrical connectors 428, 430 are sized to fit within the engine casing 420 (e.g., without requiring any redesign of the engine casing). As shown more particularly in FIG. 4B, the torque sensors 424, 426 are each disposed at an offset from the radius of the shaft 412. Additionally, the magnetized surface area 440 of the shaft 412 typically corresponds to or is slightly greater than the width of the bottom surface (e.g., the surface facing the shaft 412) of the corresponding torque sensor 424, 426, and extends over the entire circumferential area of the shaft 412 within the confines of the width of the magnetized surface area 440, which is defined by the width of the torque sensor. For example, in some embodiments, the width of the torque sensor 424, 426 is in the range of about 2.25 inches and the width of the magnetized area 440 is in the range of about 2.75 inches.

Referring now to FIG. 4B, an embodiment of a gas turbine engine 450 includes an engine casing 454, 456 (portions removed to show internal components). Within the casing 454, 456, a shaft 452 is coupled to and rotatable with a rotor 458 about an axis 468. Torque sensors 460, 462 are radially disposed about the shaft 452. In operation (e.g., during rotation of the shaft 452), the position of the torque sensors 460, 462 relative to magnetized surface area 470 of the shaft 412 produces torque output signals that can be processed and analyzed as described herein. Each of the torque sensors 460, 462 is mounted to the casing 454, 456 by mounting flanges 464, 466 and fasteners (e.g., bolts, screws, etc.). The torque sensors 460, 462 are disposed at an offset (e.g., D1) from the radius of the shaft 452. Additionally, the width (e.g., W2) of the magnetized area 470 of the shaft 452 is slightly greater than the width (e.g., W1) of each of the torque sensors 460, 462, and the magnetized area extends over the entire circumferential area of the shaft 452 within the confines of the width W2.

Embodiments of the technology described herein can be used in a variety of different applications. For example, events and conditions that can be detected using the disclosed technology include any one or more of the following. For the purpose of monitoring turbine engine health or the health of other components of the turbine engine system (such as fans and propellers), in order to, e.g., improve engine life/usage, monitored parameter(s) may include HCF (high cycle fatigue), LCF (low cycle fatigue), limit loading of shafts, compressor torque, and/or turbine torque. For the purpose of monitoring engine rotor balance, monitored components may include fan, propeller, turbine and/or compressor.

Embodiments of the disclosed technology can be used to detect engine and/or turbine engine system failure modes, such as turbine, compressor, fan, or propeller failures, including, for any such component, gear failures, bearing or seal failures, shaft misalignment, and/or shaft rub / interference. The disclosed technology can be used to detect a number of different engine events or conditions, including: compressor surge or rotating stall, shaft break, bird strike or water or ice impacting the prop, fan or inlet compressor rotors, and/or turbine or compressor rub.

Embodiments of the disclosed technology can be used to monitor rotating components, for instance to monitor one or more of: failure modes of accessory components, health and life usage of accessory components, pump torque, e.g., flow from delta pressure, ESG (electric starter-generator)/pump efficiency, generator/motor pole passing, engine accessory torque and power loading, pump gear passing, pump cavitation, and/or component shaft failure.

Embodiments of the disclosed technology can be used to monitor non-rotating components impacting shaft torque, such as fuel nozzles, IGV (inlet guide vane) misalignment, compressor/transient handling and starting bleed valves, turbine cooling, customer bleed, core engine sensor/heat exchanger/strut wake, inlet distortion, and/or prop blade actuation.

Embodiments of the disclosed technology can incorporated into real time engine control to, for example, optimize engine operation relative to damaging oscillations and torsional resonances; provide drive shaft over-torque protection (for, e.g., tower shaft, generator, ESG shafts), determine zero and low speed torque (e.g., for control protection), determine LP (low pressure) rotor brake load, and/or evaluate static starter or ESG torque.

Embodiments of the disclosed technology can measure accessory gearbox torque for the purpose of determining the health and/or operational characteristics of any or all of the accessory gearbox driven accessories through the total torque for all components, and, for each of the accessories, can identify high frequency torque content in the torque spectrum.

Embodiments of the disclosed technology can measure compressor or fan input torque to determine the health of these components (i.e., the fan or compressor). Embodiments of the disclosed technology can measure turbine output torque to determine the health of the turbine. Embodiments of the disclosed technology can measure the LP, IP or HP engine shaft torque to determine the shaft power and thereby determine the health of the components located on or coupled to the LP, IP or HP engine shafts. Embodiments of the disclosed technology can measure fan or propeller input torque to determine engine thrust based on the propulsive efficiency and shaft power. Embodiments of the disclosed technology can measure fan input torque and power in a turbofan as the thrust control parameter for the engine. Embodiments of the disclosed technology can detect bleed valve position, variable geometry positioning and other engine influences by observing the resultant engine or shaft torsional torque response at the rotor natural frequency to indicate torsional excitations close to the natural frequency. Embodiments of the disclosed technology can determine the engine rotor torsional damping and the state of components and other engine influences on the damping by observing the torsional torque response at the rotor natural frequency to torque excitations.

In the foregoing description, numerous specific details, examples, and scenarios are set forth in order to provide a more thorough understanding of the present disclosure. It will be appreciated, however, that embodiments of the disclosure may be practiced without such specific details. Further, such examples and scenarios are provided for illustration, and are not intended to limit the disclosure in any way. Those of ordinary skill in the art, with the included descriptions, should be able to implement appropriate functionality without undue experi mentation.

References in the specification to "an embodiment," etc., indicate that the embodiment described may include a particular feature, structure, or characteristic, but every embodiment may not necessarily include the particular feature, structure, or characteristic. Such phrases are not necessarily referring to the same embodiment. Further, when a particular feature, structure, or characteristic is described in connection with an embodiment, it is believed to be within the knowledge of one skilled in the art to effect such feature, structure, or characteristic in connection with other embodiments whether or not explicitly indicated.

Embodiments in accordance with the disclosure may be implemented in hardware, firmware, software, or any combination thereof. Embodiments may also be implemented as instructions stored using one or more machine-readable media, which may be read and executed by one or more processors. A machine-readable medium may include any mechanism for storing or transmitting information in a form readable by a machine. For example, a machine-readable medium may include any suitable form of volatile or non-volatile memory.

Modules, data structures, and the like defined herein are defined as such for ease of discussion, and are not intended to imply that any specific implementation details are required. For example, any of the described modules and/or data structures may be combined or divided into sub-modules, sub-processes or other units of computer code or data as may be required by a particular design or implementation.

In the drawings, specific arrangements or orderings of schematic elements may be shown for ease of description. However, the specific ordering or arrangement of such elements is not meant to imply that a particular order or sequence of processing, or separation of processes, is required in all embodiments. In general, schematic elements used to represent instruction blocks or modules may be implemented using any suitable form of machine-readable instruction, and each such instruction may be implemented using any suitable programming language, library, application programming interface (API), and/or other software development tools or frameworks. Similarly, schematic elements used to represent data or information may be implemented using any suitable electronic arrangement or data structure. Further, some connections, relationships or associations between elements may be simplified or not shown in the drawings so as not to obscure the disclosure.

This disclosure is to be considered as exemplary and not restrictive in character, and all changes and modifications that come within the disclosure are desired to be protected.

## Claims

1. A gas turbine engine system, comprising:
a gas turbine engine (150, 410, 450) comprising:
a rotor (422, 458);
an output shaft (205, 212) coupled to the rotor, the output shaft having a magnetized portion (208); and
a high frequency-capable magnetic torque sensor (142, 206, 424, 426, 460, 462) located adjacent the magnetized portion of the output shaft; and
gas turbine engine electronics (130) configured to, over time during operation of the gas turbine engine:
collect a plurality of data samples from output of the torque sensor, and with the data samples, cause one or more processors to:
perform a frequency response data analysis of the plurality of data samples in the frequency domain, wherein to perform the frequency response data analysis comprises to compare a characteristic of a frequency domain spectrum of the plurality of data samples to a predetermined characteristic associated with a frequency-domain torque-related event;
based on the frequency response data analysis in the frequency domain, identify one or more frequency-domain torque-related events resulting from torsional vibration of the output shaft;
perform a time response data analysis of the plurality of data samples in the time domain;
based on the time response data analysis in the time domain, identify one or more time-domain torque-related events resulting from torsional vibration of the output shaft;
categorize a combination of frequency-domain torque-related events and time-domain torque-related events according to one or more event categorization criteria; and
based on a category of the combination of frequency-domain torque-related events and time-domain torque-related events, initiate a communication from the gas turbine engine system to another device.

2. The gas turbine engine system of claim 1, wherein the gas turbine engine comprises a high-pressure (HP) drive train and a low-pressure (LP) drive train, the output shaft is an LP output shaft (205, 212), and the torque sensor is mounted to the LP output shaft to detect high frequency torque-related events associated with a component of the LP drive train.

3. The gas turbine engine system of claim 1, wherein the gas turbine engine comprises a high-pressure (HP) drive train and a low-pressure (LP) drive train, the output shaft is an HP output shaft (217), and the torque sensor is mounted to the HP output shaft to detect high frequency torque-related events associated with a component of the HP drive train.

4. The gas turbine engine system of claim 1, wherein the gas turbine engine comprises a high-pressure (HP) drive train and an auxiliary gearbox (AGB) drive train, the output shaft is an output shaft of the HP drive train, a first torque sensor is mounted to the HP output shaft and a second torque sensor is mounted to an AGB shaft (211), wherein the AGB shaft couples the HP drive train to the AGB (213).

5. The gas turbine engine system of any of claims 1-4, wherein the magnetized portion of the output shaft comprises a portion of a cross section of the output shaft and the magnetized portion has a length that is less than the entire length of the output shaft.

6. The gas turbine engine system of any of claims 1-5, wherein the torque sensor is mounted to the output shaft in close proximity to but not touching the magnetized portion of the output shaft.

7. The gas turbine engine system of any of claims 1-6, wherein the gas turbine engine is:
(i) a turboprop engine (200A, 200D) and the torque sensor is mounted to the engine output shaft; or
(ii) a turboshaft engine (200E, 200F); or
(iii) a turbofan engine (200B, 200C).

8. The gas turbine engine system of any of claims 1-6, wherein the gas turbine engine is a turboprop engine (200D) comprising a propeller shaft (204) and propeller gearbox(210), the output shaft is disposed within the propeller gearbox and connected to the propeller shaft, and the torque sensor is mounted to the output shaft in the propeller gearbox.

9. The gas turbine engine system of any of claims 1-6, wherein the gas turbine engine is a turboshaft engine (200E), the gas turbine engine comprises a power gearbox (210) on the output shaft (212), and the torque sensor is mounted to a shaft (204) of the power gearbox and disposed within the power gearbox.

10. The gas turbine engine system of any of claims 1-9, wherein the category is selected from a plurality of event categories including: control events, maintenance events, and engine health events.

11. The gas turbine engine system of any of claims 1-10, wherein the gas turbine engine electronics are configured to initiate an automatic engine control routine in response to a torque-related event.

12. The gas turbine engine system of any of claims 1-11, wherein the gas turbine engine system is embodied in an aircraft (108), and the gas turbine engine electronics are configured to communicate torque-related event data to:
(i) an on-board display (114) of the aircraft in response to a torque-related event; and/or
(ii) an on-ground maintenance system (158) in response to a torque-related event.

13. The gas turbine engine system of any of claims 1-12, wherein the gas turbine engine electronics are configured to store torque-related event data in a log file in response to a torque-related event.

14. The gas turbine engine system of any of claims 1-13, wherein to perform a frequency response data analysis comprises to continuously generate a high frequency domain spectrum for a plurality of different high frequencies over a time interval.

15. A method of using a high frequency torque meter signal on a gas turbine engine system,
the gas turbine engine system comprising:
a gas turbine engine (150, 410, 450) comprising:
a rotor (422, 458);
an output shaft (205, 212) coupled to the rotor, the output shaft having a magnetized portion (208); and
a high frequency-capable magnetic torque sensor (142, 206, 424, 426, 460, 462) located adjacent the magnetized portion of the output shaft; and
gas turbine engine electronics (130) configured to, over time during operation of the gas turbine engine carryout said method, the method comprising:
collecting a plurality of data samples from output of the torque sensor, and with the data samples, cause one or more processors to:
perform a frequency response data analysis of the plurality of data samples in the frequency domain, wherein to perform the frequency response data analysis comprises to compare a characteristic of a frequency domain spectrum of the plurality of data samples to a predetermined characteristic associated with a frequency-domain torque-related event;
based on the frequency response data analysis in the frequency domain, identify one or more frequency-domain torque-related events resulting from torsional vibration of the output shaft;
perform a time response data analysis of the plurality of data samples in the time domain;
based on the time response data analysis in the time domain, identify one or more time-domain torque-related events resulting from torsional vibration of the output shaft;
categorize a combination of frequency-domain torque-related events and time-domain torque-related events according to one or more event categorization criteria; and
based on a category of the combination of frequency-domain torque-related events and time-domain torque-related events, initiate a communication from the gas turbine engine system to another device.

## Patentansprüche

1. Gasturbinentriebwerk-System, umfassend:
ein Gasturbinentriebwerk (150, 410, 450), umfassend:
einen Rotor (422, 458);
eine mit dem Rotor gekoppelte Abtriebswelle (205, 212), wobei die Abtriebswelle einen magnetisierten Abschnitt (208) aufweist; und
einen hochfrequenzfähigen magnetischen Drehmomentsensor (142, 206, 424, 426, 460, 462), der angrenzend an den magnetisierten Abschnitt der Abtriebswelle angeordnet ist; und
Gasturbinentriebwerk-Elektronik (130), die dafür konfiguriert ist, im Laufe der Zeit während des Betriebs des Gasturbinentriebwerks:
eine Vielzahl von Datenproben vom Ausgang des Drehmomentsensors zu sammeln und mit den Datenproben einen oder mehrere Prozessoren zu veranlassen:
eine Frequenzgang-Datenanalyse der Vielzahl von Datenproben im Frequenzbereich durchzuführen, worin die Frequenzgang-Datenanalyse durchzuführen umfasst, eine Charakteristik eines Frequenzbereich-Spektrums der Vielzahl von Datenproben mit einer vorbestimmten Charakteristik zu vergleichen, die mit einem drehmomentbezogenen Frequenzbereich-Ereignis assoziiert ist;
beruhend auf der Frequenzgang-Datenanalyse im Frequenzbereich ein oder mehrere drehmomentbezogene Frequenzbereich-Ereignisse zu identifizieren, die aus Drehschwingungen der Abtriebswelle resultieren;
eine Zeitverhalten-Datenanalyse der Vielzahl von Datenproben im Zeitbereich durchzuführen;
beruhend auf der Zeitverhalten-Datenanalyse im Zeitbereich ein oder mehrere drehmomentbezogene Zeitbereich-Ereignisse zu identifizieren, die aus Drehschwingungen der Abtriebswelle resultieren;
eine Kombination von drehmomentbezogenen Frequenzbereich-Ereignissen und drehmomentbezogenen Zeitbereich-Ereignissen nach einem oder mehreren Ereigniskategorisierungskriterien zu kategorisieren; und
beruhend auf einer Kategorie der Kombination von drehmomentbezogenen Frequenzbereich-Ereignissen und drehmomentbezogenen Zeitbereich-Ereignissen eine Kommunikation vom Gasturbinentriebwerk-System zu einer anderen Vorrichtung zu initiieren.

2. Gasturbinentriebwerk-System nach Anspruch 1, worin das Gasturbinentriebwerk einen Hochdruck-(HP-)Antriebsstrang und einen Niederdruck-(LP-)Antriebsstrang umfasst, die Abtriebswelle eine LP-Abtriebswelle (205, 212) ist und der Drehmomentsensor an der LP-Abtriebswelle angebracht ist, um hochfrequente drehmomentbezogene Ereignisse zu erfassen, die mit einer Komponente des LP-Antriebsstrangs assoziiert sind.

3. Gasturbinentriebwerk-System nach Anspruch 1, worin das Gasturbinentriebwerk einen Hochdruck-(HP-)Antriebsstrang und einen Niederdruck-(LP-)Antriebsstrang umfasst, die Abtriebswelle eine HP-Abtriebswelle (217) ist und der Drehmomentsensor an der HP-Abtriebswelle angebracht ist, um hochfrequente drehmomentbezogene Ereignisse zu erfassen, die mit einer Komponente des HP-Antriebsstrangs assoziiert sind.

4. Gasturbinentriebwerk-System nach Anspruch 1, worin das Gasturbinentriebwerk einen Hochdruck-(HP-)Antriebsstrang und einen Hilfsgetriebe-(AGB-)Antriebsstrang umfasst, die Abtriebswelle eine Abtriebswelle des HP-Antriebsstrangs ist, ein erster Drehmomentsensor an der HP-Abtriebswelle angebracht ist und ein zweiter Drehmomentsensor an einer AGB-Welle (211) angebracht ist, worin die AGB-Welle den HP-Antriebsstrang mit dem AGB (213) koppelt.

5. Gasturbinentriebwerk-System nach einem der Ansprüche 1 bis 4, worin der magnetisierte Abschnitt der Abtriebswelle einen Abschnitt eines Querschnitts der Abtriebswelle umfasst und der magnetisierte Abschnitt eine Länge hat, die kleiner als die Gesamtlänge der Abtriebswelle ist.

6. Gasturbinentriebwerk-System nach einem der Ansprüche 1 bis 5, worin der Drehmomentsensor an der Abtriebswelle in unmittelbarer Nähe zum magnetisierten Abschnitt der Abtriebswelle angebracht ist, diesen aber nicht berührt.

7. Gasturbinentriebwerk-System nach einem der Ansprüche 1 bis 6, worin das Gasturbinentriebwerk ist:
(i) ein Turboproptriebwerk (200A, 200D) und der Drehmomentsensor ist an der Triebwerkabtriebswelle angebracht; oder
(ii) ein Wellenturbinentriebwerk (200E, 200F); oder
(iii) ein Turbofantriebwerk (200B, 200C).

8. Gasturbinentriebwerk-System nach einem der Ansprüche 1 bis 6, worin das Gasturbinentriebwerk ein Turboproptriebwerk (200D) ist, das eine Propellerwelle (204) und ein Propellergetriebe (210) umfasst, die Abtriebswelle innerhalb des Propellergetriebes angeordnet und mit der Propellerwelle verbunden ist und der Drehmomentsensor an der Abtriebswelle im Propellergetriebe angebracht ist.

9. Gasturbinentriebwerk-System nach einem der Ansprüche 1 bis 6, worin das Gasturbinentriebwerk ein Wellenturbinentriebwerk (200E) ist, das Gasturbinentriebwerk ein Leistungsgetriebe (210) auf der Abtriebswelle (212) umfasst und der Drehmomentsensor an einer Welle (204) des Leistungsgetriebes angebracht und innerhalb des Leistungsgetriebes angeordnet ist.

10. Gasturbinentriebwerk-System nach einem der Ansprüche 1 bis 9, worin die Kategorie aus einer Vielzahl von Ereigniskategorien ausgewählt wird, einschließlich: Steuerungsereignisse, Wartungsereignisse und Triebwerkzustandsereignisse.

11. Gasturbinentriebwerk-System nach einem der Ansprüche 1 bis 10, worin die Gasturbinentriebwerk-Elektronik dafür konfiguriert ist, als Reaktion auf ein drehmomentbezogenes Ereignis eine Routine der automatischen Triebwerksteuerung zu initiieren.

12. Gasturbinentriebwerk-System nach einem der Ansprüche 1 bis 11, worin das Gasturbinentriebwerk-System in einem Luftfahrzeug (108) verwirklicht ist und die Gasturbinentriebwerk-Elektronik dafür konfiguriert ist, drehmomentbezogene Ereignisdaten an Folgende zu übermitteln:
(i) eine Bordanzeige (114) des Luftfahrzeugs als Reaktion auf ein drehmomentbezogenes Ereignis; und/oder
(ii) ein Wartungssystem (158) am Boden als Reaktion auf ein drehmomentbezogenes Ereignis.

13. Gasturbinentriebwerk-System nach einem der Ansprüche 1 bis 12, worin die Gasturbinentriebwerk-Elektronik dafür konfiguriert ist, als Reaktion auf ein drehmomentbezogenes Ereignis drehmomentbezogene Ereignisdaten in einer Protokolldatei zu speichern.

14. Gasturbinentriebwerk-System nach einem der Ansprüche 1 bis 13, worin das Durchführen einer Frequenzgang-Datenanalyse umfasst, kontinuierlich ein Spektrum im Hochfrequenzbereich für eine Vielzahl von verschiedenen Hochfrequenzen über ein Zeitintervall zu erzeugen.

15. Verfahren zum Verwenden eines Hochfrequenz-Drehmomentmessersignals auf einem Gasturbinentriebwerk-System, wobei das Gasturbinentriebwerk-System umfasst:
ein Gasturbinentriebwerk (150, 410, 450), umfassend:
einen Rotor (422, 458);
eine mit dem Rotor gekoppelte Abtriebswelle (205, 212), wobei die Abtriebswelle einen magnetisierten Abschnitt (208) aufweist; und
einen hochfrequenzfähigen magnetischen Drehmomentsensor (142, 206, 424, 426, 460, 462), der angrenzend an den magnetisierten Abschnitt der Abtriebswelle angeordnet ist; und
Gasturbinentriebwerk-Elektronik (130), die dafür konfiguriert ist, im Laufe der Zeit während des Betriebs des Gasturbinentriebwerks das Verfahren auszuführen, wobei das Verfahren umfasst:
Sammeln einer Vielzahl von Datenproben vom Ausgang des Drehmomentsensors und mit den Datenproben einen oder mehrere Prozessoren dazu Veranlassen:
eine Frequenzgang-Datenanalyse der Vielzahl von Datenproben im Frequenzbereich durchzuführen, worin das Durchführen der Frequenzgang-Datenanalyse umfasst, eine Charakteristik eines Frequenzbereich-Spektrums der Vielzahl von Datenproben mit einer vorbestimmten Charakteristik zu vergleichen, die mit einem drehmomentbezogenen Frequenzbereich-Ereignis assoziiert ist;
beruhend auf der Frequenzgang-Datenanalyse im Frequenzbereich ein oder mehrere drehmomentbezogene Frequenzbereich-Ereignisse zu identifizieren, die aus Drehschwingungen der Abtriebswelle resultieren;
eine Zeitverhalten-Datenanalyse der Vielzahl von Datenproben im Zeitbereich durchzuführen;
beruhend auf der Zeitverhalten-Datenanalyse im Zeitbereich ein oder mehrere drehmomentbezogene Zeitbereich-Ereignisse zu identifizieren, die aus Drehschwingungen der Abtriebswelle resultieren;
eine Kombination von drehmomentbezogenen Frequenzbereich-Ereignissen und drehmomentbezogenen Zeitbereich-Ereignissen nach einem oder mehreren Ereigniskategorisierungskriterien zu kategorisieren; und
beruhend auf einer Kategorie der Kombination von drehmomentbezogenen Frequenzbereich-Ereignissen und drehmomentbezogenen Zeitbereich-Ereignissen eine Kommunikation vom Gasturbinentriebwerk-System zu einer anderen Vorrichtung zu initiieren.

## Revendications

1. Système de moteur à turbine à gaz, comprenant :
un moteur à turbine à gaz (150, 410, 450) comprenant :
un rotor (422, 458) ;
un arbre de sortie (205, 212) qui est couplé au rotor, l'arbre de sortie comportant une partie magnétisée (208) ; et
un capteur de couple magnétique présentant une capacité hautes fréquences (142, 206, 424, 426, 460, 462) qui est localisé de manière à ce qu'il soit adjacent à la partie magnétisée de l'arbre de sortie ; et
une électronique de moteur à turbine à gaz (130) qui est configurée de manière à ce que, pendant la durée du fonctionnement du moteur à turbine à gaz, elle réalise les actions qui suivent :
la collecte d'une pluralité d'échantillons de données en provenance de la sortie du capteur de couple et, à l'aide des échantillons de données, le fait de forcer un ou plusieurs processeur(s) à réaliser les actions qui suivent :
la réalisation d'une analyse de données de réponse en fréquence de la pluralité d'échantillons de données dans le domaine des fréquences, dans lequel la réalisation de l'analyse de données de réponse en fréquence comprend la comparaison d'une caractéristique d'un spectre du domaine des fréquences de la pluralité d'échantillons de données avec une caractéristique prédéterminée qui est associée à un événement rapporté à un couple du domaine des fréquences ;
sur la base de l'analyse des données de réponse en fréquence dans le domaine des fréquences, l'identification d'un ou de plusieurs événement(s) rapporté(s) à un couple du domaine des fréquences qui résulte(nt) d'une vibration en torsion de l'arbre de sortie ;
la réalisation d'une analyse de données de réponse en temps de la pluralité d'échantillons de données dans le domaine temporel ;
sur la base de l'analyse de données de réponse en temps dans le domaine temporel, l'identification d'un ou de plusieurs événement(s) rapporté(s) à un couple du domaine temporel qui résulte(nt) d'une vibration en torsion de l'arbre de sortie ;
la catégorisation d'une combinaison d'événements rapportés à un couple du domaine des fréquences et d'événements rapportés à un couple du domaine temporel en fonction d'un ou de plusieurs critère(s) de catégorisation d'événement ; et
sur la base d'une catégorie de la combinaison d'événements rapportés à un couple du domaine des fréquences et d'événements rapportés à un couple du domaine temporel, l'initiation d'une communication depuis le système de moteur à turbine à gaz jusqu'à un autre dispositif

2. Système de moteur à turbine à gaz selon la revendication 1, dans lequel le moteur à turbine à gaz comprend une chaîne cinématique hautes pressions (HP) et une chaîne cinématique basses pressions (LP), l'arbre de sortie est un arbre de sortie LP (205, 212) et le capteur de couple est monté sur l'arbre de sortie LP de manière à ce qu'il détecte des événements rapportés à un couple hautes fréquences qui sont associés à un composant de la chaîne cinématique LP.

3. Système de moteur à turbine à gaz selon la revendication 1, dans lequel le moteur à turbine à gaz comprend une chaîne cinématique hautes pressions (HP) et une chaîne cinématique basses pressions (LP), l'arbre de sortie est un arbre de sortie HP (217) et le capteur de couple est monté sur l'arbre de sortie HP de manière à ce qu'il détecte des événements rapportés à un couple hautes fréquences qui sont associés à un composant de la chaîne cinématique HP.

4. Système de moteur à turbine à gaz selon la revendication 1, dans lequel le moteur à turbine à gaz comprend une chaîne cinématique hautes pressions (HP) et une chaîne cinématique à boîte de vitesses auxiliaire (AGB), l'arbre de sortie est un arbre de sortie de la chaîne cinématique HP, un premier capteur de couple est monté sur l'arbre de sortie HP et un second capteur de couple est monté sur un arbre d'AGB (211), dans lequel l'arbre d'AGB couple la chaîne cinématique HP à l'AGB (213).

5. Système de moteur à turbine à gaz selon l'une quelconque des revendications 1 à 4, dans lequel la partie magnétisée de l'arbre de sortie comprend une partie d'une section transversale de l'arbre de sortie et la partie magnétisée présente une longueur qui est inférieure à la longueur totale de l'arbre de sortie.

6. Système de moteur à turbine à gaz selon l'une quelconque des revendications 1 à 5, dans lequel le capteur de couple est monté sur l'arbre de sortie à proximité étroite de la partie magnétisée de l'arbre de sortie mais sans qu'il soit en contact avec celle-ci.

7. Système de moteur à turbine à gaz selon l'une quelconque des revendications 1 à 6, dans lequel le moteur à turbine à gaz est :
(i) un moteur turbopropulseur (200A, 200D) et le capteur de couple est monté sur l'arbre de sortie de moteur ; ou
(ii) un moteur turbomoteur (200E, 200F) ; ou
(iii) un moteur turboréacteur à double flux (200B, 200C).

8. Système de moteur à turbine à gaz selon l'une quelconque des revendications 1 à 6, dans lequel le moteur à turbine à gaz est un moteur turbopropulseur (200D) qui comprend un arbre d'organe de propulsion (204) et une boîte de vitesses d'organe de propulsion (210), l'arbre de sortie est disposé à l'intérieur de la boîte de vitesses d'organe de propulsion et est connecté à l'arbre d'organe de propulsion, et le capteur de couple est monté sur l'arbre de sortie de la boîte de vitesses d'organe de propulsion.

9. Système de moteur à turbine à gaz selon l'une quelconque des revendications 1 à 6, dans lequel le moteur à turbine à gaz est un moteur turbomoteur (200E), le moteur à turbine à gaz comprend une boîte de vitesses de puissance (210) sur l'arbre de sortie (212), et le capteur de couple est monté sur un arbre (204) de la boîte de vitesses de puissance et est disposé à l'intérieur de la boîte de vitesses de puissance.

10. Système de moteur à turbine à gaz selon l'une quelconque des revendications 1 à 9, dans lequel la catégorie est sélectionnée parmi une pluralité de catégories d'événements incluant : des événements de commande, des événements de maintenance et des événements concernant l'état du moteur.

11. Système de moteur à turbine à gaz selon l'une quelconque des revendications 1 à 10, dans lequel l'électronique du moteur à turbine à gaz est configurée de manière à ce qu'elle initie un programme de commande automatique de moteur en réponse à un événement rapporté à un couple.

12. Système de moteur à turbine à gaz selon l'une quelconque des revendications 1 à 11, dans lequel le système de moteur à turbine à gaz est mis en oeuvre à l'intérieur d'un aéronef (108), et l'électronique du moteur à turbine à gaz est configurée de manière à ce qu'elle communique des données d'événement rapporté à un couple à :
(i) un affichage embarqué (114) de l'aéronef en réponse à un événement rapporté à un couple ; et/ou à
(ii) un système de maintenance au sol (158) en réponse à un événement rapporté à un couple.

13. Système de moteur à turbine à gaz selon l'une quelconque des revendications 1 à 12, dans lequel l'électronique du moteur à turbine à gaz est configurée de manière à ce qu'elle stocke des données d'événement rapporté à un couple à l'intérieur d'un fichier journal en réponse à un événement rapporté à un couple.

14. Système de moteur à turbine à gaz selon l'une quelconque des revendications 1 à 13, dans lequel la réalisation d'une analyse de données de réponse en fréquence comprend la génération en continu d'un spectre du domaine des hautes fréquences pour une pluralité de différentes hautes fréquences sur un intervalle temporel.

15. Procédé d'utilisation d'un signal de mesure de couple hautes fréquences sur un système de moteur à turbine à gaz,
le système de moteur à turbine à gaz comprenant :
un moteur à turbine à gaz (150, 410, 450) comprenant :
un rotor (422, 458) ;
un arbre de sortie (205, 212) qui est couplé au rotor, l'arbre de sortie comportant une partie magnétisée (208) ; et
un capteur de couple magnétique présentant une capacité hautes fréquences (142, 206, 424, 426, 460, 462) qui est localisé de manière à ce qu'il soit adjacent à la partie magnétisée de l'arbre de sortie ; et
une électronique de moteur à turbine à gaz (130) qui est configurée de manière à ce que, pendant la durée du fonctionnement du moteur à turbine à gaz, elle mette en oeuvre ledit procédé, le procédé comprenant :
la collecte d'une pluralité d'échantillons de données en provenance de la sortie du capteur de couple et, à l'aide des échantillons de données, le fait de forcer un ou plusieurs processeur(s) à réaliser les actions qui suivent :
la réalisation d'une analyse de données de réponse en fréquence de la pluralité d'échantillons de données dans le domaine des fréquences, dans lequel la réalisation de l'analyse de données de réponse en fréquence comprend la comparaison d'une caractéristique d'un spectre du domaine des fréquences de la pluralité d'échantillons de données avec une caractéristique prédéterminée qui est associée à un événement rapporté à un couple du domaine des fréquences ;
sur la base de l'analyse des données de réponse en fréquence dans le domaine des fréquences, l'identification d'un ou de plusieurs événement(s) rapporté(s) à un couple du domaine des fréquences qui résulte(nt) d'une vibration en torsion de l'arbre de sortie ;
la réalisation d'une analyse de données de réponse en temps de la pluralité d'échantillons de données dans le domaine temporel ;
sur la base de l'analyse de données de réponse en temps dans le domaine temporel, l'identification d'un ou de plusieurs événement(s) rapporté(s) à un couple du domaine temporel qui résulte(nt) d'une vibration en torsion de l'arbre de sortie ;
la catégorisation d'une combinaison d'événements rapportés à un couple du domaine des fréquences et d'événements rapportés à un couple du domaine temporel en fonction d'un ou de plusieurs critère(s) de catégorisation d'événement ; et
sur la base d'une catégorie de la combinaison d'événements rapportés à un couple du domaine des fréquences et d'événements rapportés à un couple du domaine temporel, l'initiation d'une communication depuis le système de moteur à turbine à gaz jusqu'à un autre dispositif
